# FASCICULE DE BREVET EUROPEEN

(11) **EP 3 949 291 B1**
(45) Date de publication et mention de la délivrance du brevet: **05.07.2023**
(21) Numéro de dépôt: 21727172.5
(22) Date de dépôt: 25.05.2021
(51) Int. Cl.: H04B 7/185, H04L 45/00, H04L 45/50

(54) **ROUTAGE DE PAQUETS AU SEIN D'UN RÉSEAU DE COMMUNICATION PRÉSENTANT UNE TOPOLOGIE VARIABLE ET PRÉDICTIBLE**
VERFAHREN ZUR LEITWEGLENKUNG VON PAKETEN IN EINEM KOMMUNIKATIONSNETZ MIT VARIABLER UND VORHERSAGBARER TOPOLOGIE
METHOD FOR ROUTING PACKETS IN A COMMUNICATION NETWORK HAVING A VARIABLE AND PREDICTABLE TOPOLOGY

(30) Priorité: 25.05.2020 FR 2005483
(43) Date de publication de la demande: 09.02.2022
(73) Titulaire: Airbus Defence and Space SAS, 31402 Toulouse Cedex 4 (FR)
(72) Inventeur: CLAUDE, Bertrand, 31402 Toulouse cedex 4 (FR); IHAMOUINE, Raphaël, 31402 Toulouse cedex 4 (FR); AUGER, Antoine, 31402 Toulouse cedex 4 (FR)
(74) Mandataire: Ipside
(86) Numéro de dépôt international: PCT/EP2021/063928
(87) Numéro de publication internationale: WO 2021/239740

(56) Documents cités:
- EP-A1- 3 616 370
- CN-A- 110 518 959
- US-A1- 2019 190 821
- US-B2- 11 201 820
- GIORGETTI A ET AL: "Segment routing for effective recovery and multi-domain traffic engineering", JOURNAL OF OPTICAL COMMUNICATIONS AND NETWORKING, INSTITUTE OF ELECTRICAL AND ELECTRONICS ENGINEERS, US, vol. 9, no. 2, 1 février 2017 (2017-02-01) , XP011641460, ISSN: 1943-0620, DOI: 10.1364/JOCN.9.00A223 [extrait le 2017-02-16]
- MEHMET TOY VERIZON CO BASKING RIDGE ET AL: "Technical Report XXX;SG3_030-R9.4", ITU-T DRAFT; STUDY PERIOD 2017-2020; FOCUS GROUP NET-2030; SERIES SG3_030-R9.4, INTERNATIONAL TELECOMMUNICATION UNION, GENEVA ; CH , vol. net-2030 8 mai 2020 (2020-05-08), pages 1-113, XP044295411, Extrait de l'Internet: URL:https://extranet.itu.int/sites/itu-t/f ocusgroups/net-2030/subgroup3_workspace/NE T2030%20SG3_030-R9.4.18.docx [extrait le 2020-05-08]
- WOOD L ET AL: "IP routing issues in satellite constellation networks", INTERNATIONAL JOURNAL OF SATELLITE COMMUNICATIONS, JOHN WILEY AND SONS, US, vol. 18, no. 6, 1 December 2000 (2000-12-01), pages 1-18, XP002336261, ISSN: 0737-2884, DOI: 10.1002/(SICI)1099-1247(200001/02)18:1<1:: AID-SAT648>3.0.CO;2-G

## Description

### Domaine de l'invention

La présente invention appartient au domaine du routage de paquets d'un flux de communication au sein d'un réseau. L'invention concerne notamment un procédé de routage de paquets dans un réseau de communication présentant une topologie variable au cours du temps, mais pour lequel la topologie reste prédictible. L'invention concerne également une entité d'orchestration du réseau mettant en oeuvre certaines étapes dudit procédé.

### Etat de la technique

Les méthodes conventionnelles de routage de paquets, comme par exemple les méthodes basées sur la commutation de labels (MPLS pour « Multi-Protocol Label Switching »), ne sont généralement pas bien adaptées pour les réseaux de communication présentant une grande variabilité de topologie. Ces méthodes conventionnelles reposent généralement sur des algorithmes distribués dans les différents noeuds du réseau. Chaque noeud du réseau doit alors posséder une connaissance de la topologie du réseau et de l'intelligence pour déterminer par où faire transiter un paquet du flux de communication.

Ces méthodes conventionnelles sont rapidement limitées en termes de complexité, de réactivité et d'évolutivité. Parmi les inconvénients de ces méthodes conventionnelles reposant sur un algorithme distribué, il apparaît notamment que :
- l'algorithme met parfois plus de temps à converger que la durée pendant laquelle la topologie du réseau reste fixe,
- l'algorithme ne permet pas toujours de satisfaire les objectifs de qualité de service, notamment parce que les différents noeuds ne peuvent pas assurer une optimisation globale du trafic dans la mesure où ils ne possèdent pas les moyens de prendre en compte l'ensemble de la demande de trafic au sein du réseau,
- il est nécessaire de propager des informations aux différents noeuds d'un chemin envisagé, et cette propagation d'information peut parfois nécessiter plus de temps que la durée pendant laquelle l'existence du chemin peut être garantie.

Le document « Segment Routing for effective recovery and multi-domain traffic engineering », A. Giorgetti et al., décrit des méthodes de routage de paquets de données dans un réseau de communication basées sur l'architecture standardisée « Segment Routing ».

La demande de brevet CN 110 518 959 A décrit une méthode de communication par réseau de satellites en orbites basses basée sur les technologies MPLS et DTN (acronyme de « Delay-Tolerant Network ») et visant à améliorer la vitesse et la fiabilité de la communication par micro-réseaux.

Le document « Technical Report XXX - FG NET-2030 Report on Network2030 Architecture Framework », M. Toy et al., décrit l'architecture du réseau « Network 2030 ».

Toutefois, aucun de ces documents n'apportent de solution pour prendre en compte de façon efficace une forte variabilité de la topologie du réseau de communication. L'invention est définie par les revendications indépendantes.

### Exposé de l'invention

Pour pallier aux inconvénients de l'art antérieur, et selon un premier aspect, il est proposé par la présente invention, un procédé de routage de paquets de données au sein d'un réseau de communication. Le réseau comprend plusieurs entités de routage, appelées « noeuds ». Chaque noeud peut être connecté au moins temporairement à un ou plusieurs autres noeuds du réseau. Le réseau permet la transmission d'un paquet de données d'un flux de communication entre au moins un premier noeud, dit « noeud source », et au moins un deuxième noeud, dit « noeud destinataire », à travers un chemin reliant le noeud source au noeud destinataire en passant par un ou plusieurs noeuds « intermédiaires ». Le réseau présente une topologie variable. On entend par là que la disponibilité d'un lien de connexion entre deux noeuds du réseau varie au cours du temps. Le procédé est adapté pour un réseau de communication utilisant une constellation de satellites en orbite non-géostationnaire autour de la Terre. En effet, le procédé s'applique particulièrement bien dans le cas où la durée d'existence d'un chemin entre le noeud source et le noeud destinataire peut être plus courte que la durée nécessaire pour propager aux noeuds du réseau des informations de contrôle relatives aux changements de topologie du réseau. La variabilité de la topologie du réseau est cependant prédictible. On entend par là qu'il est possible d'anticiper les changements de topologie qui vont avoir lieu au cours d'une certaine période de temps. Le procédé comporte les étapes suivantes :
- Une détermination, par une entité d'orchestration, d'une pluralité de chemins temporaires entre le noeud source et le noeud destinataire pour une pluralité de périodes de temps successives déterminées. Chaque chemin temporaire est associé à une période de temps particulière. Chaque chemin temporaire définit, pour la période de temps à laquelle il est associé, un chemin reliant le noeud source et le noeud destinataire en passant par un ou plusieurs noeuds intermédiaires. L'existence de chaque chemin temporaire est garantie pendant la période de temps à laquelle il associé. Chaque chemin temporaire est défini en fonction de la topologie variable et prédictible du réseau de façon à relier le noeud source et le noeud destinataire.
- Une génération, par ladite entité d'orchestration, d'au moins une table de piles de labels. Chaque pile de labels de la table correspond à un des chemins temporaires défini pour l'une desdites périodes de temps successives déterminées. Chaque label correspond à un des noeuds intermédiaires du chemin temporaire. La table de piles de labels est ensuite mise à disposition du noeud source.
- Une encapsulation, par le noeud source, dans chaque paquet de données transmis pendant une période de temps, de la pile de labels correspondant à ladite période de temps dans la table.
- Une transmission du paquet de données au noeud intermédiaire correspondant au label présent au sommet de la pile de labels.
- A la réception de chaque paquet de données par le noeud intermédiaire correspondant au label présent au sommet de la pile de labels encapsulée dans le paquet de données : une extraction dudit label de la pile de labels et une transmission du paquet de données à un autre noeud correspondant au label nouvellement placé au sommet de la pile de labels, jusqu'à ce que la pile de labels soit vide.

La pile de labels initialement encapsulée dans un paquet par le noeud source est ainsi progressivement dépilée au fur et à mesure de la progression du paquet sur le chemin temporaire à destination du noeud destinataire. Un paquet de données transmis par le noeud source pendant une période de temps donnée va alors suivre le chemin temporaire correspondant à la pile de labels associée à ladite période de temps. L'utilisation successive de différentes piles de labels associées respectivement à différentes périodes de temps et correspondant à différents chemins temporaires dont l'existence est garantie pendant chaque période de temps permet ainsi d'assurer de manière optimale la transmission de tous les paquets de données du flux de communication entre le noeud source et le noeud destinataire.

Il convient de noter que la détermination des chemins temporaires associés aux périodes de temps successives est faite par l'entité d'orchestration à un instant donné pour plusieurs périodes de temps successives dans le futur. Ceci est possible car la variabilité de la topologie du réseau est prédictible. On entend par là qu'il est toujours possible de définir à l'avance la topologie du réseau de communication pour plusieurs périodes de temps successives futures (la topologie du réseau étant différente d'une période à l'autre). Une table de piles de labels peut alors être générée par l'entité d'orchestration pour représenter ces chemins temporaires que devront suivre les paquets au cours des périodes de temps successives futures.

Ces étapes de détermination des chemins temporaires et de génération de la table de piles de labels sont mises en oeuvre de façon centralisée par l'entité d'orchestration, à partir d'informations connues par l'entité d'orchestration sur les changements de topologie à venir du réseau de communication. Cela ne nécessite donc pas de protocole de contrôle basé sur des communications de signalisation avec les noeuds du réseau.

Dans des modes particuliers de mise en oeuvre, le réseau de communication comporte au moins un premier domaine et un deuxième domaine. Les deux domaines peuvent présenter des variabilités de topologie différentes (on entend par là que l'ordre de grandeur de la fréquence des changements de topologie peut être différent entre les deux domaines). Chaque chemin entre le noeud source et le noeud destinataire comporte une première partie formée par un ou plusieurs des noeuds intermédiaires appartenant au premier domaine et une deuxième partie formée par un ou plusieurs des noeuds intermédiaires appartenant au deuxième domaine. Le réseau comporte, pour chaque partie, un noeud d'entrée permettant d'établir une connexion vers ladite partie. Le noeud d'entrée peut correspondre au noeud source ou à un noeud intermédiaire. La génération, par l'entité d'orchestration, d'au moins une table de piles de labels comporte au moins deux générations à savoir :
- Une génération, par l'entité d'orchestration, d'une première table de piles de labels définissant, pour chacune d'une première pluralité de périodes de temps successives déterminées, une première partie d'un chemin temporaire entre le noeud source et le noeud destinataire. Cette première partie définit un chemin temporaire entre un noeud d'entrée vers la première partie et un noeud d'entrée vers une deuxième partie du chemin temporaire. Cette première partie est définie en fonction de la topologie variable et prédictible du réseau de façon à relier le noeud d'entrée vers la première partie et le noeud d'entrée vers la deuxième partie.
- Une génération, par l'entité d'orchestration, d'une deuxième table de piles de labels définissant, pour chacune d'une deuxième pluralité de périodes de temps successives déterminées, ladite deuxième partie du chemin temporaire. Cette deuxième partie est définie en fonction de la topologie variable et prédictible du réseau de façon à relier le noeud d'entrée vers la deuxième partie et le noeud destinataire.

Le procédé de routage comporte en outre :
- Une fourniture de la première table de piles de labels au noeud d'entrée vers la première partie.
- Une fourniture de la deuxième table de piles de labels au noeud d'entrée vers la deuxième partie.

Un label positionné à la base d'une pile de labels de la première table est un pointeur identifiant la deuxième table de piles de label.

De telles dispositions permettent d'une part de prendre en compte les différences de variabilité de topologie de chaque domaine, et d'autre part de limiter la taille des informations de routage encapsulées dans un paquet de données.

Dans des modes particuliers de mise en oeuvre, le réseau de communication est un réseau de communication par satellite comportant au moins un domaine spatial dont les noeuds sont formés par des satellites en orbite non-géostationnaire autour de la Terre, et au moins un domaine terrestre dont une partie au moins des noeuds sont formés par des stations passerelles, des routeurs, des points d'échange, et/ou des terminaux utilisateurs de communication par satellite.

Dans des modes particuliers de mise en oeuvre, un routage de type explicite est utilisé pour définir, dans le domaine spatial, au moins une partie du chemin entre le noeud source et le noeud destinataire. Pour un routage de type explicite un label est explicitement associé à chaque noeud intermédiaire appartenant à ladite partie du chemin.

Dans des modes particuliers de mise en oeuvre, un routage de type implicite est utilisé pour définir, dans le domaine terrestre, au moins une partie du chemin entre le noeud source et le noeud destinataire. Pour un routage de type implicite au moins un noeud intermédiaire appartenant à ladite partie du chemin n'est pas explicitement associé à un label.

Dans des modes particuliers de mise en oeuvre, le noeud source est un terminal utilisateur de communication par satellite, le noeud destinataire est un point d'échange, une première partie du chemin entre le terminal utilisateur et le point d'échange est formée dans le domaine spatial par un ou plusieurs satellites, une station passerelle assure le rôle de point d'entrée vers une deuxième partie du chemin formée dans le domaine terrestre par un ou plusieurs routeurs jusqu'au point d'échange.

Dans des modes particuliers de mise en oeuvre, le noeud source est un premier point d'échange, le noeud destinataire est un deuxième point d'échange, un chemin entre le premier point d'échange et le deuxième point d'échange comporte une première partie dans le domaine terrestre jusqu'à une première station passerelle, une deuxième partie dans le domaine spatial entre la première station passerelle et une deuxième station passerelle, et une troisième partie dans le domaine terrestre entre la deuxième station passerelle et le deuxième point d'échange.

Dans des modes particuliers de mise en oeuvre, le noeud source est un premier terminal utilisateur de communication par satellite, le noeud destinataire est un deuxième terminal utilisateur de communication par satellite, les noeuds intermédiaires du chemin entre le noeud source et le noeud destinataire appartenant exclusivement au domaine spatial.

Dans des modes particuliers de mise en oeuvre, le noeud source est un satellite en orbite non-géostationnaire autour de la Terre et le noeud destinataire est un terminal utilisateur de communication par satellite ou un point d'échange.

Dans des modes particuliers de mise en oeuvre, lorsqu'au moins une portion de chemin entre un noeud courant et un noeud suivant correspondant au label placé au sommet de la pile de labels encapsulée dans un paquet reçu par le noeud courant est accidentellement indisponible, le procédé comporte une étape de remplacement par le noeud courant d'un ou plusieurs labels placés au sommet de la pile par un ou plusieurs labels de remplacement correspondant à un chemin de secours, lesdits labels de remplacement ayant été préalablement déterminés et fournis au noeud courant par l'entité d'orchestration.

Dans des modes particuliers de mise en oeuvre, le procédé de routage comporte une étape de génération par l'entité d'orchestration d'une table de secours de piles de labels, ladite table de secours étant utilisée par le noeud source lorsqu'une portion au moins du chemin entre le noeud source et le noeud destinataire devient accidentellement indisponible.

Selon un deuxième aspect, la présente invention concerne une entité d'orchestration pour router des paquets de données au sein d'un réseau de communication présentant une topologie variable et prédictible. Le réseau comprend plusieurs entités de routage, appelées « noeuds ». Chaque noeud peut être connecté au moins temporairement à un ou plusieurs autres noeuds du réseau. Le réseau permet la transmission d'un paquet de données d'un flux de communication entre au moins un premier noeud, dit « noeud source », et au moins un deuxième noeud, dit « noeud destinataire », à travers un chemin reliant le noeud source au noeud destinataire en passant par un ou plusieurs noeuds « intermédiaires ». L'entité d'orchestration est adaptée pour un réseau de communication utilisant une constellation de satellites en orbite non-géostationnaire autour de la Terre, et elle est configurée pour :
- Déterminer une pluralité de chemins temporaires entre le noeud source et le noeud destinataire pour une pluralité de périodes de temps successives déterminées. Chaque chemin temporaire est associé à une période de temps particulière. Chaque chemin temporaire définit, pour la période de temps à laquelle il est associé, un chemin reliant le noeud source et le noeud destinataire en passant par un ou plusieurs noeuds intermédiaires. L'existence de chaque chemin temporaire est garantie pendant la période de temps à laquelle il est associé. Chaque chemin temporaire est défini en fonction de la topologie variable et prédictible du réseau de façon à relier le noeud source et le noeud destinataire.
- Générer au moins une table de piles de labels. Chaque pile de labels de la table correspond au chemin temporaire associé à l'une desdites périodes de temps successives déterminées. Chaque label correspond à un des noeuds intermédiaires du chemin temporaire.
- Fournir la table de piles de labels au noeud source.

Dans des modes particuliers de réalisation, le réseau de communication comporte au moins un premier domaine et un deuxième domaine (les deux domaines pouvant présenter des variabilités de topologie différentes). Chaque chemin entre le noeud source et le noeud destinataire comporte une première partie formée par un ou plusieurs des noeuds intermédiaires appartenant au premier domaine et une deuxième partie formée par un ou plusieurs des noeuds intermédiaires appartenant au deuxième domaine. Le réseau comporte, pour chaque partie, un noeud d'entrée permettant d'établir une connexion vers ladite partie depuis une autre partie. Le noeud d'entrée peut correspondre au noeud source ou à un noeud intermédiaire. L'entité d'orchestration est alors configurée, lors de la génération de ladite au moins une table de piles de label, pour :
- Générer une première table de piles de labels définissant, pour chacune d'une première pluralité de périodes de temps successives déterminées, une première partie d'un chemin temporaire entre le noeud source et le noeud destinataire, ladite première partie définissant un chemin temporaire entre un noeud d'entrée vers la première partie et un noeud d'entrée vers une deuxième partie du chemin temporaire. Ladite première partie est définie en fonction de la topologie variable et prédictible du réseau de façon à relier le noeud d'entrée vers la première partie et le noeud d'entrée vers la deuxième partie.
- Générer une deuxième table de piles de labels définissant, pour chacune d'une deuxième pluralité de périodes de temps successives déterminées, ladite deuxième partie du chemin temporaire. Ladite deuxième partie est définie en fonction de la topologie variable et prédictible du réseau de façon à relier le noeud d'entrée vers la deuxième partie et le noeud destinataire.

L'entité d'orchestration est en outre configurée pour :
- Envoyer la première table de piles de labels au noeud d'entrée vers la première partie.
- Envoyer la deuxième table de piles de labels au noeud d'entrée vers la deuxième partie.

Un label positionné à la base d'une pile de labels de la première table est un pointeur identifiant la deuxième table de piles de label.

Selon un troisième aspect, la présente invention concerne un réseau de communication présentant une topologie variable et prédictible. Le réseau de communication comprend plusieurs entités de routage, appelées « noeuds ». Chaque noeud peut être connecté au moins temporairement à un ou plusieurs autres noeuds du réseau. Le réseau permet la transmission d'un paquet de données d'un flux de communication entre un premier noeud, dit « noeud source », et un deuxième noeud, dit « noeud destinataire », à travers un chemin reliant le noeud source au noeud destinataire en passant par un ou plusieurs noeuds « intermédiaires ». Le réseau de communication comporte une entité d'orchestration selon l'un quelconque des modes de réalisation précédents. Le noeud source est configuré pour encapsuler, pendant chaque période de temps, la pile de labels correspondante dans chaque paquet de données transmis pendant ladite période de temps. Le noeud intermédiaire correspondant au label présent au sommet de la pile de labels encapsulée dans un paquet de données est configuré pour extraire ledit label de la pile de labels et pour transmettre le paquet de données à un autre noeud correspondant au label nouvellement placé au sommet de la pile de labels, jusqu'à ce que la pile de labels soit vide.

Dans des modes particuliers de réalisation, le réseau de communication est un réseau de communication par satellite comportant un domaine spatial dont les noeuds sont formés par des satellites en orbite non-géostationnaire autour de la Terre, et un domaine terrestre dont une partie au moins des noeuds sont formés par des stations passerelles, des routeurs, des points d'échange, et/ou des terminaux utilisateurs de communication par satellite.

### Présentation des figures

L'invention sera mieux comprise à la lecture de la description suivante, donnée à titre d'exemple nullement limitatif, et faite en se référant aux figures 1 à 13 qui représentent :
[Fig. 1] une représentation schématique de différentes topologies d'un réseau de communication à différentes périodes de temps successives,
[Fig. 2] une représentation schématique de différents chemins temporaires associés à différentes périodes de temps successives dans un réseau de communication dont la topologie varie au cours du temps,
[Fig. 3] un exemple de mise en oeuvre de l'invention pour un flux de communication entre deux terminaux utilisateurs au sein d'un réseau de communication par satellite,
[Fig. 4] une représentation schématique des principales étapes d'un procédé de routage selon l'invention pour router des paquets de données d'un flux de communication au sein d'un réseau de communication présentant une topologie variable et prédictible,
[Fig. 5] une représentation schématique d'une table de piles de labels correspondant respectivement à différents chemins temporaires associés à différentes périodes de temps successives,
[Fig. 6] une représentation schématique d'un réseau de communication à topologie variable comportant deux domaines différents,
[Fig. 7] un exemple de mise en oeuvre de l'invention pour un flux de communication depuis un point d'échange vers un terminal utilisateur au sein d'un réseau de communication par satellite,
[Fig. 8] un exemple de mise en oeuvre de l'invention pour un flux de communication depuis un terminal utilisateur vers un point d'échange au sein d'un réseau de communication par satellite,
[Fig. 9] une représentation schématique des principales étapes d'un mode particulier de mise en oeuvre d'un procédé de routage selon l'invention,
[Fig. 10] un exemple de mise en oeuvre de l'invention pour un flux de communication entre deux points d'échange au sein d'un réseau de communication par satellite,
[Fig. 11] un exemple de mise en oeuvre de l'invention pour un flux de communication entre un satellite et un point d'échange au sein d'un réseau de communication par satellite,
[Fig. 12] une représentation schématique d'un premier mécanisme de secours en cas de défaillance d'une portion d'un chemin envisagé pour le routage d'un flux de communication,
[Fig. 13] une représentation schématique d'un deuxième mécanisme de secours en cas de défaillance d'une portion d'un chemin envisagé pour le routage d'un flux de communication.

Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée d'un mode de réalisation de l'invention

L'invention s'applique à des réseaux de communication présentant une topologie variable et prédictible. Le réseau de communication peut être assimilé à un ensemble d'entités de routage, appelées « noeuds ». Chaque noeud peut être connecté au moins temporairement à un ou plusieurs autres noeuds du réseau. Le réseau permet de transmettre un paquet de données d'un flux de communication depuis un noeud source vers un noeud destinataire à travers un chemin reliant le noeud source au noeud destinataire en passant par un ou plusieurs noeuds intermédiaires. Un chemin correspond donc à un ensemble de noeuds et de connexions reliant ces noeuds deux à deux depuis le noeud source jusqu'au noeud destinataire. La topologie du réseau est variable dans le sens où la disponibilité d'un lien de connexion entre deux noeuds du réseau varie au cours du temps. L'invention trouve une application particulièrement intéressante dans le cas où la variabilité de la topologie du réseau de communication est telle que la durée d'existence d'un chemin entre le noeud source et le noeud destinataire peut être plus courte, voire significativement plus courte, que la durée nécessaire pour propager aux noeuds du réseau des informations de contrôle relatives aux changements de topologie du réseau. C'est le cas notamment si des changements de topologie ont lieu fréquemment, et/ou si l'étendue et la complexité du réseau sont importantes. La topologie du réseau de communication reste cependant prédictible. Autrement dit, les changements de topologie du réseau de communication au cours du temps sont déterministes, c'est-à-dire qu'il est possible d'anticiper les changements de topologie qui vont avoir lieu au cours d'une certaine période de temps.

Dans les exemples considérés, les changements de topologie du réseau résultent généralement de la nature même du réseau de communication (ils ne sont donc généralement pas la conséquence d'une défaillance du réseau). C'est le cas par exemple pour un réseau de communication utilisant une constellation de satellites en orbite non-géostationnaire autour de la Terre (NGSO pour « Non-Geostationary Satellite Orbit » dans la littérature anglo-saxonne). D'autres exemples peuvent cependant être relevés, comme par exemple des réseaux de communication basés sur des drones ou des stations placées sur des plate-formes à haute altitude (HAPS pour « High-Altitude Platform Station » dans la littérature anglo-saxonne).

Dans un tel réseau de communication, pour satisfaire des besoins de qualité de service, il convient généralement de garantir l'acheminement de tous les paquets du flux de communication en un temps prédéterminé.

Un réseau de communication utilisant une constellation de satellites en orbite non-géostationnaire est généralement composé d'un domaine spatial formé par les satellites de la constellation (ou éventuellement plusieurs domaines spatiaux si plusieurs constellations différentes sont impliquées) et d'un domaine terrestre formé notamment par des stations passerelles, des routeurs, des points d'échange vers des réseaux terrestres (par exemple Internet) et/ou des terminaux utilisateurs de communication par satellite (VSAT pour « Very Small Aperture Terminal » dans la littérature anglo-saxonne). Dans un tel réseau de communication, la variabilité de la topologie est particulièrement forte à la frontière entre le domaine spatial et le domaine terrestre. La durée pendant laquelle un satellite en orbite non-géostationnaire est visible par une station au sol dépend de nombreux paramètres comme par exemple l'altitude et l'élévation du satellite ou les performances des antennes du satellite et de la station au sol. Un satellite de communication situé à une altitude de 1300 kms sera par exemple visible par une station au sol seulement pendant quelques minutes.

Un chemin entre le noeud source et le noeud destinataire peut comprendre une partie dans le domaine spatial et une partie dans le domaine terrestre. La partie dans le domaine spatial peut comporter plusieurs satellites connectés via des liens inter-satellites. Dans un tel cas, la période de visibilité du satellite à l'entrée de la partie spatiale par une station au sol peut être différente de la période de visibilité d'un autre satellite à la sortie de la partie spatiale par une autre station au sol. Dans un tel cas, la période de validité pendant laquelle un chemin complet depuis le noeud source jusqu'au noeud destinataire reste valide correspond alors à la plus petite période de visibilité parmi les deux périodes de visibilité mentionnées. Pendant cette période de validité, on peut considérer que la topologie du réseau ne change pas pour le flux de communication considéré. La durée de cette période de validité peut cependant ne pas être suffisante pour permettre la transmission de tous les paquets du flux de communication.

Il convient en outre de noter qu'un tel réseau de communication peut comporter plusieurs centaines, voire plusieurs milliers, de satellites et plusieurs millions de terminaux utilisateurs.

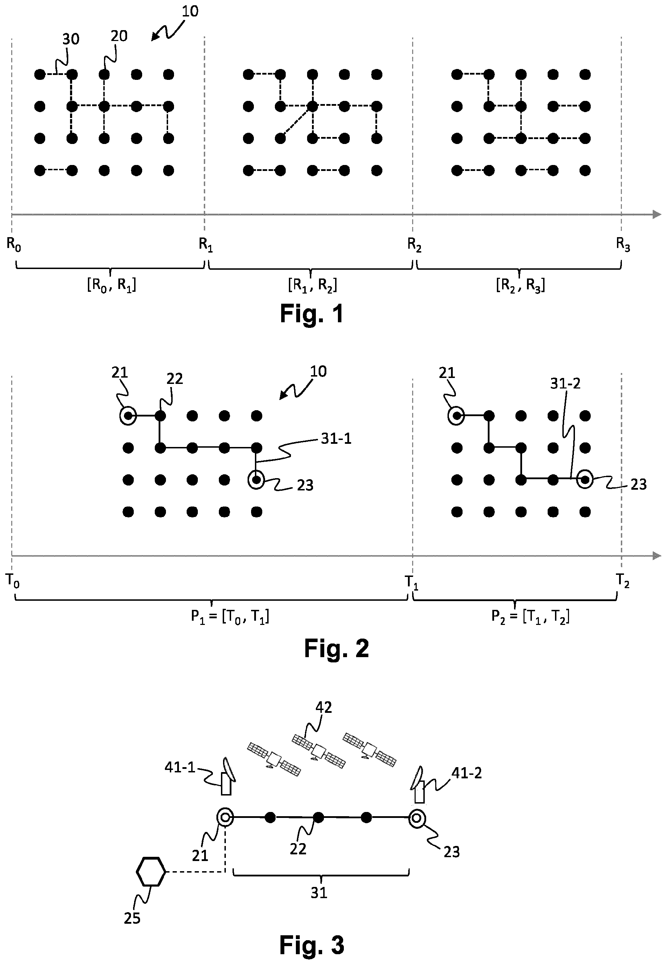

La présente invention s'applique à des réseaux de communication dont la topologie est variable et prédictible. La notion de variabilité de la topologie du réseau de communication peut être représenté par un ensemble de graphes tels qu'illustrés sur la figure 1. Chaque graphe comporte des noeuds 20 correspondant à des entités de routage du réseau 10 de communication, ainsi que des liens 30 de connexion reliant des noeuds 20 deux à deux. Sur la figure 1, le temps est représenté selon un axe horizontal, et le temps est découpé en plusieurs périodes de temps. Pendant chaque période de temps, la topologie du réseau 10 de communication est statique, c'est-à-dire que la topologie du réseau 10 de communication reste fixe. Autrement dit, il y a des changements de topologie du réseau 10 de communication d'une période à l'autre, mais il n'y a pas de changement de topologie au sein d'une période. Sur l'exemple illustré à la figure 1, le réseau 10 de communication comporte vingt noeuds 20. A l'instant R₀, il y a dix liens 30 de connexion reliant certains noeuds 20 deux à deux. Il y a des changements de topologie aux instant R₁ et R₂. La topologie du réseau 10 de communication reste donc statique pendant les périodes de temps [R₀, R₁], [R₁, R₂] et [R₂, R₃]. Toutefois, la topologie du réseau 10 de communication est différente pendant ces différentes périodes de temps. En particulier, la topologie du réseau 10 de communication pendant la période [R₁, R₂] est différente de la topologie du réseau 10 de communication pendant la période [R₀, R₁]: certains liens 30 de connexion ont disparu, tandis que de nouveaux liens de connexions sont apparus. De même, la topologie du réseau 10 de communication pendant la période [R₂, R₃] est différente de la topologie du réseau 10 de communication pendant la période [R₁, R₂]. Il convient de noter que la durée des périodes de temps [R₀, R₁], [R₁, R₂], [R₂, R₃], etc., ne sont pas nécessairement identiques et peuvent varier au fil du temps.

Pour l'invention, on considère que la variabilité de topologie du réseau 10 de communication est prédictible, c'est-à-dire qu'il est toujours possible, tel qu'illustré sur la figure 1, de définir à l'avance une séquence ordonnée de plusieurs graphes représentant la topologie du réseau 10 de communication sur plusieurs périodes de temps successives.

Pour transmettre un ensemble de paquets de données correspondant à un flux de communication entre un premier noeud, dit « noeud source », et un deuxième noeud, dit « noeud destinataire », il convient d'établir au sein du réseau 10 de communication un chemin reliant le noeud source au noeud destinataire en passant par un ou plusieurs noeuds intermédiaires. En raison des changements de topologie du réseau 10 de communication, l'existence de ce chemin pourra cependant être garantie seulement pendant une certaine période de temps. La durée de la période de temps pendant laquelle l'existence d'un chemin entre le noeud source et le noeud destinataire peut être garantie peut cependant être plus courte que la durée nécessaire pour transmettre tous les paquets de données du flux de communication. Aussi, la durée d'existence d'un chemin entre le noeud source et le noeud destinataire peut être plus courte que la durée nécessaire pour propager aux noeuds du réseau des informations de contrôle relatives aux changements de topologie du réseau. Dans ce cas, il convient de définir plusieurs chemins temporaires correspondant respectivement à plusieurs périodes de temps successives de telle sorte que, pendant chaque période de temps, l'existence du chemin temporaire est garantie.

Ceci est illustré par la figure 2 qui représente schématiquement deux chemins temporaires 31-1 et 31-2 reliant un noeud source 21 à un noeud destinataire 23 en passant par plusieurs noeuds intermédiaires 22 pour deux périodes de temps successives P₁ et P₂, pour le réseau 10 de communication illustré à la figure 1. Il convient de noter que le noeud source 21, le noeud destinataire 23 et les noeuds intermédiaires 22 sont tous des noeuds 20 du réseau 10 de communication. Selon le flux de communication considéré, un noeud 20 du réseau 10 de communication peut potentiellement jouer le rôle de noeud source 21, de noeud destinataire 23 ou de noeud intermédiaire 22.

Les instants T₀, T₁ et T₂ de la figure 2 correspondent respectivement aux instants R₀, R₂ et R₃ de la figure 1. Il convient de noter que le chemin 31-1 temporaire correspondant à la période P₁ n'est pas impacté par le changement de topologie qui a lieu à l'instant R₁ car chacun des six liens 30 de connexion formant ce chemin temporaire existe pendant toute la durée de la période de temps P₁ = [T₀, T₁] (car ces liens de connexion existent aussi bien pendant la période de temps [R₀, R₁] que pendant la période de temps [R₁, R₂]). Pendant la période P₂ = [T₁, T₂], un autre chemin 31-2 temporaire comprenant des liens de connexion différents permet de relier le noeud source 21 au noeud destinataire 23. Pendant toute la durée de la période de temps P₁, l'existence du chemin 31-1 temporaire est garantie. Pendant toute la durée de la période de temps P₂, l'existence du chemin 31-2 temporaire est garantie. La durée de chaque période P₁, P₂ doit être plus longue que la durée requise pour transmettre un paquet de données du noeud source 21 au noeud destinataire 23. La transmission de tous les paquets du flux de communication entre le noeud source 21 et le noeud destinataire 23 s'étale en revanche sur plusieurs périodes de temps successives.

Dans la suite de la description, on se place à titre d'exemple nullement limitatif dans le cas d'un réseau 10 de communication par satellite. La figure 3 illustre un exemple de chemin 31 temporaire établi pendant une certaine période de temps entre un premier terminal utilisateur 41-1 de communication par satellite, jouant le rôle de noeud source 21, et un deuxième terminal utilisateur 41-2 de communication par satellite, jouant le rôle de noeud destinataire 23. Dans l'exemple considéré, chaque noeud intermédiaire 22 du chemin 31 temporaire correspond à un satellite 42 d'une constellation de satellites en orbite non-géostationnaire. Comme cela a déjà été expliqué précédemment, la variabilité de la topologie d'un tel réseau 10 de communication s'explique notamment par le fait que la période de visibilité d'un satellite 42 par un terminal utilisateur 41-1, 41-2 a une durée relativement faible qui peut être plus courte que la durée nécessaire pour transmettre tous les paquets de données d'un flux de communication entre les deux terminaux utilisateurs. Les terminaux utilisateurs 41-1, 41-2 correspondent par exemple à des « terminaux à très petite ouverture d'antenne » (VSAT pour « Very Small Aperture Terminal » dans la littérature anglo-saxonne), c'est-à-dire des terminaux de communication par satellite qui utilise au sol des antennes paraboliques directives dont le diamètre est généralement inférieur à trois mètres.

Tel qu'illustré sur la figure 3, au moins une entité d'orchestration 25 possédant une connaissance holistique de la topologie du réseau 10 de communication et de sa variabilité au cours du temps est utilisée pour définir un routage des paquets de données pour que le flux de communication entre le noeud source et le noeud destinataire soit transmis en respectant une certaine qualité de service. Il est envisageable d'utiliser plusieurs entités d'orchestration organisées de façon collaborative, de façon hiérarchique, ou d'une façon hybride à la fois collaborative et hiérarchique, pour partager la connaissance de la topologie du réseau 10 de communication et de sa variabilité au cours du temps.

Une entité d'orchestration 25 comporte par exemple un ou plusieurs processeurs et des moyens de mémorisation (disque dur magnétique, mémoire électronique, disque optique, etc.) dans lesquels est mémorisé un produit programme d'ordinateur sous la forme d'un ensemble d'instructions de code de programme à exécuter pour mettre en oeuvre certaines étapes du procédé de routage selon l'invention. Alternativement ou en complément, l'entité d'orchestration 25 comporte un ou des circuits logiques programmables (FPGA, PLD, etc.), et/ou un ou des circuits intégrés spécialisés (ASIC), et/ou un ensemble de composants électroniques discrets, etc.

Dans l'exemple considéré, pour pouvoir déterminer les changements de topologie du réseau 10 de communication au cours du temps, l'entité d'orchestration 25 connaît par exemple les paramètres orbitaux des satellites 42 et les positions géographiques des terminaux utilisateurs 41-1, 41-2.

De manière similaire, les différents noeuds (noeud source, noeud destinataire, noeuds intermédiaires) comportent également des moyens logiciels et/ou matériels pour mettre en oeuvre certaines étapes du procédé de routage selon l'invention.

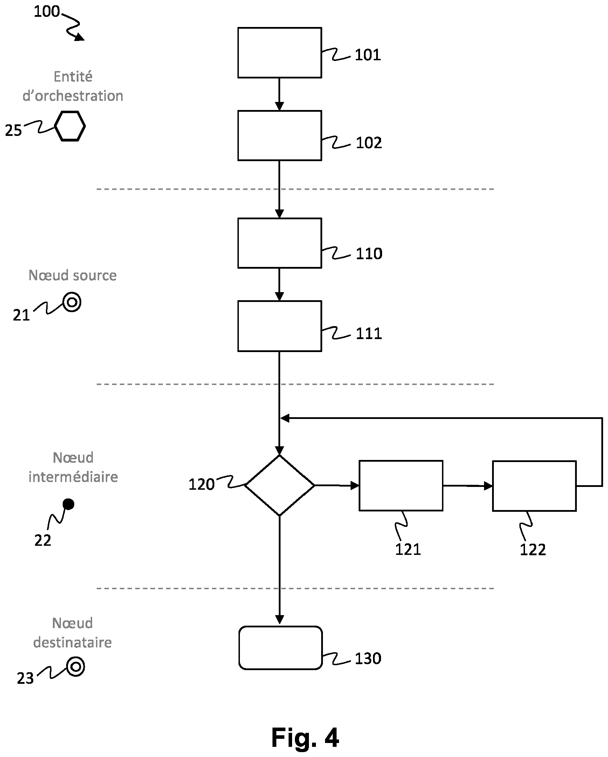

La figure 4 illustre schématiquement les principales étapes d'un procédé 100 de routage selon l'invention pour router des paquets d'un flux de communication entre un noeud source 21 et un noeud destinataire 23 du réseau 10 de communication.

Le procédé 100 comporte notamment une étape de détermination 101, par l'entité d'orchestration 25, d'un chemin 31 temporaire entre le noeud source 21 et le noeud destinataire 23 pour chacune d'une pluralité de périodes de temps successives P₁, P₂, ..., Pᵢ, ..., etc. Un chemin 31 temporaire définit, pour une période de temps Pᵢ particulière, un chemin reliant le noeud source 21 et le noeud destinataire 23 en passant par un ou plusieurs noeuds intermédiaires 22. Pendant la période de temps Pᵢ, l'existence dudit chemin est garantie, et au moins un paquet de données peut être transmis du noeud source 21 au noeud destinataire 23. Ainsi, différents chemins 31 temporaires sont définis pour les différentes périodes de temps Pᵢ, et chaque chemin 31 temporaire est associé à une période de temps Pᵢ particulière.

Le procédé 100 comporte notamment une étape de génération 102, par ladite entité d'orchestration 25, d'une table de piles de labels. Chaque pile de labels de la table correspond au chemin 31 temporaire défini pour l'une desdites périodes de temps Pᵢ successives. Chaque label d'une pile de labels correspond à un noeud du chemin 31 temporaire.

Il convient de noter que différentes méthodes peuvent être envisagées pour l'attribution des labels. Par exemple, si une méthode de routage explicite est utilisée, un label est explicitement associé à chaque noeud intermédiaire 22 appartenant au chemin 31 temporaire. Le chemin 31 est alors entièrement défini par une pile de labels.

Selon un autre exemple, si une méthode de routage implicite est utilisée, au moins un noeud intermédiaire 22 appartenant au chemin 31 temporaire n'est pas explicitement associé à un label de la pile de labels. Autrement dit, avec un routage implicite, un label traité par un noeud intermédiaire 22 ne correspond pas nécessairement à un noeud adjacent, et le noeud intermédiaire 22 est chargé de définir lui-même un sous-chemin vers le noeud correspondant audit label. L'existence d'au moins un tel sous-chemin doit cependant être garantie pendant la période de temps considérée.

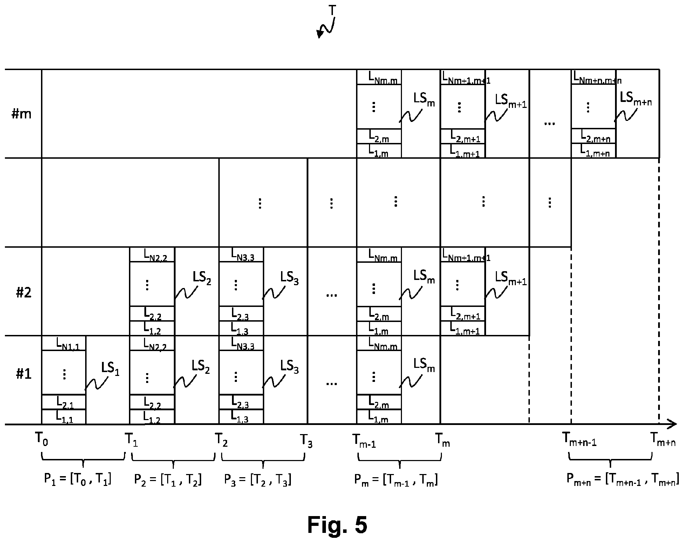

La figure 5 représente une table T de piles LSᵢ de labels L_{j,i} associés respectivement à des périodes de temps Pᵢ successives. Pour une période de temps donnée Pᵢ, la pile LSᵢ de labels L_{j,i} définit un chemin temporaire qui persiste pendant toute la durée de la période Pᵢ et qui permet de transmettre un ou plusieurs paquets de données du noeud source 21 au noeud destinataire 23. Chaque label L_{j,i} correspond à un noeud dudit chemin temporaire. La pile LSᵢ comporte Nᵢ labels : L_{1,i}, L_{2,i}, ..., L_{j,i}, ..., L_{Ni,i}. Le nombre Nᵢ de labels d'une pile LSᵢ de labels peut varier d'une période de temps Pᵢ à une autre. En effet, les différentes piles LSᵢ de labels représentent des chemins temporaires différents qui peuvent présenter des nombres différents de noeuds intermédiaires. Pendant la période de temps Pᵢ, et pour atteindre le noeud destinataire, un paquet transitera successivement par le noeud correspondant au label L_{1,i}, le noeud correspondant au label L_{2,i}, ..., le noeud correspondant au label L_{j,i}, ..., le noeud correspondant au label L_{Ni,j}.

Dans l'exemple considéré et illustré à la figure 5, l'entité d'orchestration 25 est capable, à un instant donné, de déterminer des chemins temporaires entre le noeud source 21 et le noeud destinataire 23 pour au moins m périodes de temps successives. L'entité d'orchestration 25 peut alors empiler dans la table T plusieurs séquences de piles de labels. La première ligne #1 de la table correspond à une première séquence de m piles de labels LS₁, LS₂, ..., LSₘ correspondant respectivement à m chemins temporaires pour m périodes de temps P₁, P₂, ..., Pₘ successives. La deuxième ligne #2 de la table correspond aux piles de labels LS₂, LS₃, ..., LSₘ₊₁ correspondant respectivement aux chemins temporaires pour les périodes de temps P₂, P₃, ..., Pₘ₊₁ successives. La ligne #m de la table correspond aux piles de labels LSₘ, LSₘ₊₁, ..., LSₘ₊ₙ correspondant respectivement aux chemins temporaires pour les périodes de temps Pₘ, Pₘ₊₁, ..., Pₘ₊ₙ successives.

Il convient de noter que pour un noeud courant, la correspondance entre un label L_{j,i} et un autre noeud fournit un moyen pour atteindre ledit autre noeud depuis le noeud courant. Ainsi, pour un noeud courant, un label L_{j,i} peut être associé à un identifiant de noeud. Selon un autre exemple, un label L_{j,i} peut être associé à un ou plusieurs liens de connexion à emprunter pour atteindre un autre noeud.

La table T générée par l'entité d'orchestration 25 est alors mise à disposition du noeud source 21. Selon un premier exemple, la table T est directement envoyée par l'entité d'orchestration 25 au noeud source 21. Selon un autre exemple, une entité de contrôle peut servir d'intermédiaire entre l'entité d'orchestration 25 et le noeud source 21. Selon différentes variantes, le noeud source 21 peut recevoir les différentes piles LSᵢ de labels les unes après les autres, ou bien le noeud source 21 peut recevoir successivement des séquences de piles de labels correspondant à des lignes de la table (transmission de la table T une ligne après l'autre), ou bien le noeud source 21 peut recevoir plusieurs lignes de la table T simultanément.

Le noeud source 21 est alors configuré pour jouer, pour chaque période de temps Pᵢ successive, la pile LSᵢ de labels associée à ladite période de temps Pᵢ. A cette fin, le procédé 100 de routage selon l'invention comporte une étape d'encapsulation 110, par le noeud source 21, dans chaque paquet de données transmis pendant ladite période de temps Pᵢ, de la pile LSᵢ de labels correspondant à ladite période de temps Pᵢ dans la table T. Le protocole GSE (« Generic Stream Encapsulation ») peut par exemple être employé pour ajouter des informations décrivant la pile LSᵢ de labels dans un en-tête du paquet de données.

Le procédé 100 de routage comporte ensuite une transmission 111 dudit paquet de données à un noeud intermédiaire 22 correspondant au label L_{1,i} présent au sommet de la pile LSᵢ de labels. Il convient de noter que sur la figure 5, le label L_{1,i} présent au sommet de la pile LSᵢ de labels (c'est-à-dire le premier label à suivre pour router un paquet de données pendant la période de temps Pᵢ) est situé en bas.

Les noeuds intermédiaires 22 du réseau 10 de communication sont configurés pour router un paquet de données conformément à la pile de labels qui a été encapsulée dans ledit paquet. A cette fin, le procédé 100 de routage comporte, pour chaque noeud qui reçoit un paquet de données du flux de communication :
- une vérification 120 si le paquet reçu comporte une pile de labels non vide,
- si la pile de labels du paquet est vide, alors le paquet est arrivé à destination, et le noeud qui a reçu le paquet correspond au noeud destinataire (étape 130 sur la figure 5),
- si la pile de labels encapsulée dans le paquet n'est pas vide, alors le noeud qui a reçu le paquet est un noeud intermédiaire 22, et le procédé 100 comporte :
   ∘ une extraction 121 dudit label de la pile de labels,
   ∘ une transmission 122 du paquet de données à un autre noeud correspondant au label nouvellement placé au sommet de la pile de labels (si la pile de labels est vide après l'étape d'extraction 121, alors le paquet est directement transmis au noeud destinataire dont l'adresse est par exemple indiquée, de manière conventionnelle, dans un en-tête du paquet).

La pile de labels initialement encapsulée dans un paquet par le noeud source 21 est ainsi progressivement dépilée au fur et à mesure de la progression du paquet sur le chemin temporaire à destination du noeud destinataire 23.

Un paquet de données transmis pendant une période de temps Pᵢ par le noeud source 21 va alors suivre le chemin temporaire correspondant à la pile LSᵢ de labels L_{j,i}. L'utilisation successive de différentes piles de labels associées respectivement à différentes périodes de temps et correspondant à différents chemins temporaires dont l'existence est garantie pendant chaque période de temps permet ainsi d'assurer de façon optimale la transmission de tous les paquets de données du flux de communication entre le noeud source 21 et le noeud destinataire 23.

Il convient de noter que les étapes du procédé 100 de routage mises en oeuvre par l'entité d'orchestration 25 peuvent être exécutées en parallèle des étapes mises en oeuvre par le noeud source 21 et par les différents noeuds intermédiaires 22. En effet, l'entité d'orchestration 25 peut s'occuper de mettre à jour la table T de piles de labels pour des périodes de temps futures pendant que le noeud source 21 et les noeuds intermédiaires 22 s'occupent de router les paquets conformément au chemin temporaire valide pour une période de temps en cours. Il convient également de noter que l'entité d'orchestration 25 et le noeud source 21 pourraient former une seule et même entité physique.

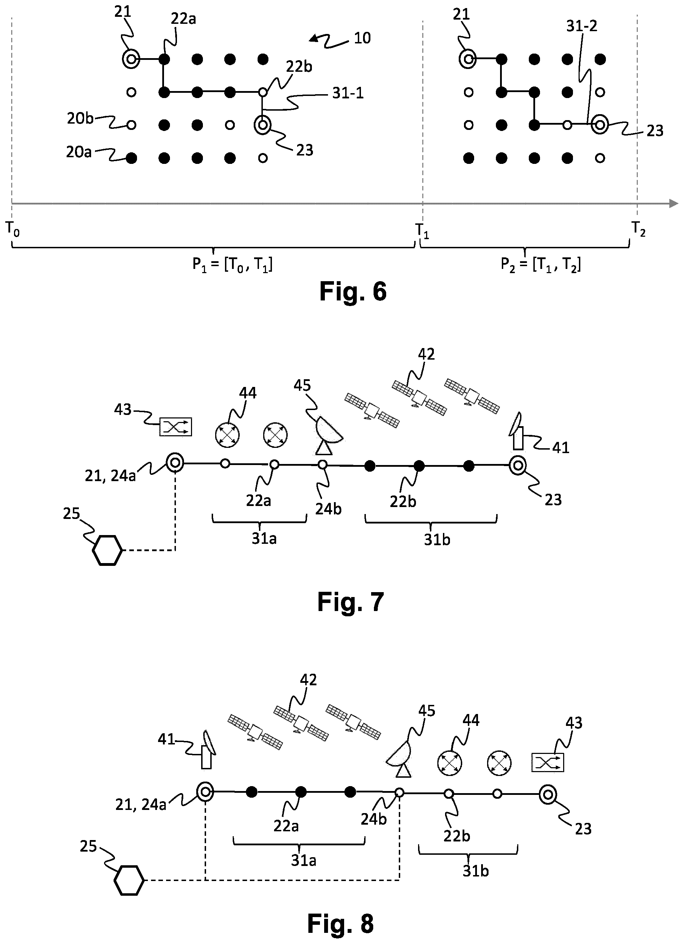

De manière générale, le réseau 10 de communication peut comporter des domaines différents présentant des variabilités de topologie différentes. Dans l'exemple considéré d'un réseau 10 de communications par satellite, le réseau 10 comporte un domaine spatial dont les noeuds sont formés par des satellites 42 en orbite non-géostationnaire autour de la Terre, et un domaine terrestre dont les noeuds sont formés par des entités au sol, comme par exemple des terminaux utilisateurs, des stations passerelles, des routeurs, et/ou des points d'échange avec d'autres réseaux de communication comme par exemple le réseau Internet. Ceci est illustré schématiquement sur la figure 6 sur laquelle les noeuds 20a appartenant au domaine spatial sont représentés en noir tandis que les noeuds 20b appartenant au domaine terrestre sont représentés en blanc. Un chemin temporaire 31-1, 31-2 comporte alors un ou plusieurs noeuds intermédiaires 22a appartenant à une première partie du chemin dans le domaine spatial et un ou plusieurs noeuds intermédiaires 22b appartenant à une deuxième partie du chemin dans le domaine terrestre. Il convient de noter que l'invention pourrait également s'appliquer à des cas où le réseau comporte un nombre de domaines différents supérieur à deux.

La figure 7 illustre un exemple de mise en oeuvre de l'invention pour un flux de communication depuis un point d'échange 43 vers un terminal utilisateur 41 au sein d'un réseau de communication par satellite. Le point d'échange 43 joue donc le rôle de noeud source 21 tandis que le terminal utilisateur 41 joue le rôle de noeud destinataire 23. Un chemin temporaire 31 reliant le point d'échange 43 au terminal utilisateur 41 comporte une première partie 31a formée dans le domaine terrestre par un ou plusieurs routeurs 44 (correspondant à des noeuds intermédiaires 22a appartenant au domaine terrestre), et une deuxième partie 31b formée dans le domaine spatial par un ou plusieurs satellites 42 (correspondant à des noeuds intermédiaires 22b appartenant au domaine spatial). Une station passerelle 45 joue le rôle d'un noeud d'entrée 24b pour établir une connexion depuis la première partie 31a dans le domaine terrestre vers la deuxième partie 31b dans le domaine spatial. Dans l'exemple illustré à la figure 7, le point d'échange 43 joue non seulement le rôle de noeud source 21 mais aussi le rôle de noeud d'entrée 24a vers la première partie 31a du chemin dans le domaine terrestre.

En outre, les différentes parties du chemin 31 entre le noeud source 21 et le noeud destinataire 23 peuvent supporter des technologies de routage différentes. Par exemple, un routage de type implicite est utilisé pour définir la première partie 31a du chemin correspondant au domaine terrestre (pour un routage de type implicite au moins un noeud intermédiaire 22a appartenant à ladite première partie du chemin n'est pas explicitement associé à un label), tandis qu'un routage de type explicite est utilisé pour définir la deuxième partie 31b du chemin correspondant au domaine spatial (pour un routage de type explicite un label est explicitement associé à chaque noeud intermédiaire 22b appartenant à ladite deuxième partie 31b du chemin).

Conformément au procédé 100 de routage décrit en référence à la figure 4, une entité d'orchestration 25 génère la table de pile de labels à utiliser pour router un paquet de données. La table est mise à disposition du noeud source 21. Une pile de labels encapsulée dans un paquet de données par le noeud source 21 correspond alors à la concaténation d'une première pile de labels pour router le paquet le long de la première partie selon un routage explicite, et une deuxième pile de labels pour router le paquet long de la deuxième partie selon un routage implicite. Dans un tel mode de mise en oeuvre, la complexité des opérations de routage supportées par la station passerelle 45 est relativement limitée (elle joue simplement le rôle d'un noeud intermédiaire).

Il peut cependant être avantageux de limiter la taille des informations de routage encapsulées dans un paquet de données. Aussi, il peut être avantageux de prendre en compte les différences de variabilité de topologie de chaque domaine.

La figure 8 illustre un exemple de mise en oeuvre de l'invention pour un flux de communication depuis un terminal utilisateur 41 vers un point d'échange 43 au sein d'un réseau de communication par satellite. Le terminal utilisateur 41 joue donc le rôle de noeud source 21 tandis que le point d'échange 43 joue le rôle de noeud destinataire 23. Un chemin temporaire 31 reliant le terminal utilisateur 41 au point d'échange 43 comporte une première partie 31a formée dans le domaine spatial par un ou plusieurs satellites 42 (correspondant à des noeuds intermédiaires 22a appartenant au domaine spatial), et une deuxième partie 31b formée dans le domaine terrestre par un ou plusieurs routeurs 44 (correspondant à des noeuds intermédiaires 22b appartenant au domaine terrestre). Une station passerelle 45 joue le rôle d'un noeud d'entrée 24b pour établir une connexion depuis la première partie 31a dans le domaine spatial vers la deuxième partie 31b dans le domaine terrestre. Dans l'exemple illustré à la figure 8, le terminal utilisateur 41 joue non seulement le rôle de noeud source 21 mais aussi le rôle de noeud d'entrée 24a vers la première partie 31a du chemin dans le domaine spatial.

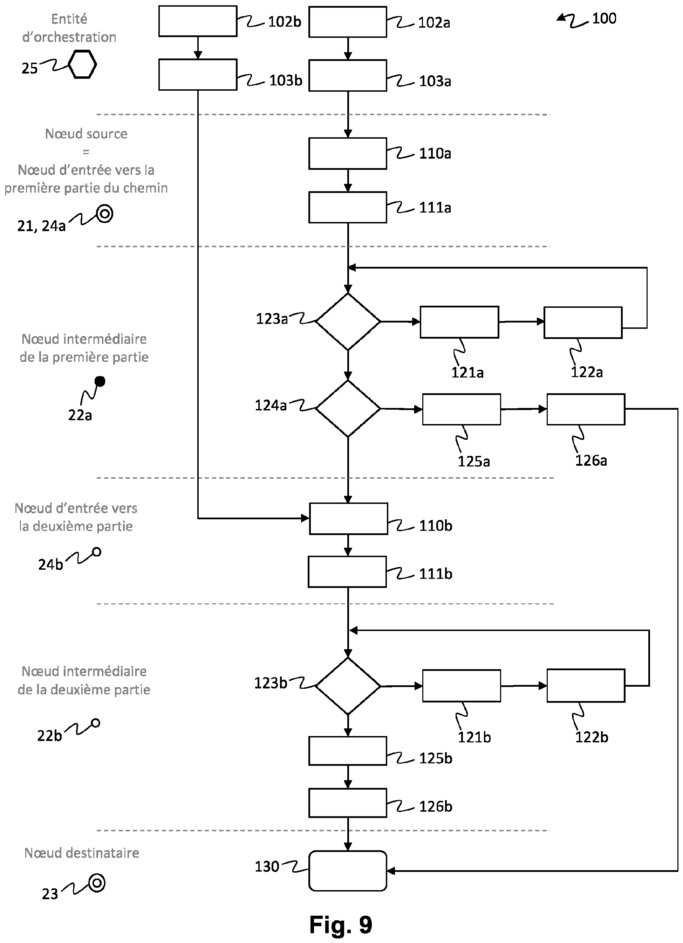

Tel qu'illustré sur la figure 9, le procédé 100 de routage peut alors avantageusement comporter au niveau de l'entité d'orchestration :
- une génération 102a d'une première table de piles de labels définissant, pour chacune d'une première pluralité de périodes de temps successives, une première partie 31a d'un chemin 31 temporaire entre le noeud source 21 et le noeud destinataire 23 ; ladite première partie 31a définit un chemin temporaire entre un noeud d'entrée 24a vers la première partie 31a et un noeud d'entrée 24b vers une deuxième partie 31b du chemin 31 temporaire ; la première partie 31a est déterminée en fonction de la topologie variable et prédictible du réseau 10 de façon à relier le noeud d'entrée 24a vers la première partie 31a et le noeud d'entrée 24b vers la deuxième partie 31b du chemin 31 temporaire ;
- une génération 102b d'une deuxième table de piles de labels définissant, pour chacune d'une deuxième pluralité de périodes de temps successives, ladite deuxième partie 31b du chemin 31 temporaire entre le noeud source et le noeud destinataire ; la deuxième partie 31b est déterminée en fonction de la topologie variable et prédictible du réseau 10 de façon à relier le noeud d'entrée 24b vers la deuxième partie 31b et le noeud destinataire 23 ;

- une fourniture 103a de la première table de piles de labels au noeud d'entrée 24a vers la première partie 31a ;
- une fourniture 103b de la deuxième table de piles de labels au noeud d'entrée 24b vers la deuxième partie 31b.
Dans ce mode particulier de mise en oeuvre, un label positionné à la base d'une pile de labels de la première table est un pointeur identifiant la deuxième table de piles de labels. Un label positionné à la base d'une pile de labels de la première table correspond au dernier label de la pile à être extrait de la pile pendant le routage d'un paquet le long de la première partie 31a du chemin. Le pointeur identifie la deuxième table de pile de labels qui doit être utilisée par le noeud d'entrée 24b pour router le paquet le long de la deuxième partie 31b du chemin.

Dans l'exemple considéré, le noeud source 21 correspond au noeud d'entrée 24a vers la première partie 31a.

Tel qu'illustré sur la figure 9, le procédé 100 de routage comporte au niveau du noeud d'entrée 24a vers la première partie 31a du chemin :
- une encapsulation 110a, dans chaque paquet de données transmis pendant une période de temps de la première pluralité de périodes de temps, de la pile de labels correspondant à ladite période de temps dans la première table,
- une transmission 111a dudit paquet de données à un noeud intermédiaire 22a correspondant au label présent au sommet de la pile de labels.

Ces étapes 110a et 111a sont similaires aux étapes 110 et 111 préalablement décrites en référence à la figure 4.

Le paquet de données progresse ensuite à travers les différents noeuds intermédiaires 22a de la première partie 31a du chemin. Tel qu'illustré sur la figure 9, le procédé 100 de routage comporte au niveau de chaque noeud intermédiaire 22a de la première partie 31a :
- une vérification 123a si le label présent au sommet de la pile de labels encapsulée dans le paquet de données est le dernier label de la pile,
- s'il ne s'agit pas du dernier label de la pile, une extraction 121a dudit label et une transmission 122a du paquet au noeud correspondant au label nouvellement placé au sommet de la pile,
- s'il s'agit du dernier paquet de la pile, une vérification 124a si le label est un pointeur,
   ∘ si le dernier label n'est pas un pointeur, le label identifie le dernier noeud avant d'atteindre le noeud destinataire 23, et le procédé 100 de routage comporte alors une extraction 125a de ce dernier label et une transmission 126a au dernier noeud avant d'atteindre le noeud destinataire à l'étape 130,
   ∘ si le dernier label est un pointeur, le noeud courant est en fait un noeud d'entrée 24b vers la deuxième partie 31b du chemin, et le label identifie la deuxième table de pile de labels qui doit être utilisée par le noeud d'entrée 24b pour router le paquet le long de la deuxième partie 31b du chemin.

Le procédé 100 de routage comporte au niveau du noeud d'entrée 24b vers la deuxième partie 31b du chemin :
- une encapsulation 110b dans le paquet de données de la pile de labels correspondant à la période de temps actuelle dans la deuxième table,
- une transmission 111b dudit paquet de données à un noeud intermédiaire 22b correspondant au label présent au sommet de la pile de labels.

Le paquet de données progresse ensuite à travers les différents noeuds intermédiaires 22b de la deuxième partie 31b du chemin. Tel qu'illustré sur la figure 9, le procédé 100 de routage comporte au niveau de chaque noeud intermédiaire 22b de la deuxième partie 31b :
- une vérification 123b si le label présent au sommet de la pile de labels encapsulée dans le paquet de données est le dernier label de la pile,
- s'il ne s'agit pas du dernier label de la pile, une extraction 121b dudit label et une transmission 122b du paquet au noeud correspondant au label nouvellement placé au sommet de la pile,
- s'il s'agit du dernier label de la pile, le label identifie le dernier noeud avant d'atteindre le noeud destinataire 23, et le procédé 100 de routage comporte alors une extraction 125b de ce dernier label et une transmission 126b au dernier noeud avant d'atteindre le noeud destinataire à l'étape 130.

Il convient de noter que les périodes de temps des deux tables ne sont pas nécessairement les mêmes : les instants de début, les instants de fin et les durées des périodes de temps de la première table peuvent être différents de ceux de la deuxième table. Cela permet avantageusement de prendre en compte la différence de variabilité de topologie des deux domaines (un domaine présentant une topologie qui varie de façon peu dynamique pourra utiliser des périodes de temps de durée relativement longue par rapport à la durée des périodes de temps utilisées pour un autre domaine dont la topologie varie de façon plus dynamique).

De telles dispositions permettent également de limiter la quantité d'informations à encapsuler dans un paquet de données. En effet, à un instant donné, le paquet de données encapsule seulement les informations permettant de router le paquet le long d'une partie du chemin (et non pas toutes les informations permettant de le router le paquet le long du chemin complet).

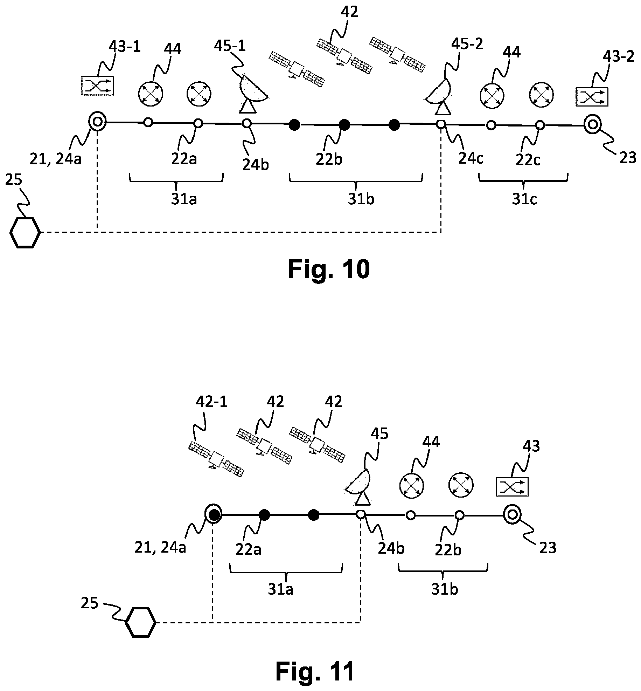

Les figures 8 et 9 illustrent un exemple pour lequel le chemin 31 entre le noeud source 21 et le noeud destinataire 23 comporte deux parties 31a et 31b. L'invention s'applique cependant également à des cas où le chemin 31 entre le noeud source 21 et le noeud destinataire 23 comporte plus que deux parties. La figure 10 illustre notamment un exemple où le chemin 31 comporte trois parties 31a, 31b et 31c.

La figure 10 illustre un exemple de mise en oeuvre de l'invention pour un flux de communication depuis un premier point d'échange 43-1 (correspondant au noeud source 21) et un deuxième point d'échange 43-2 (correspondant au noeud destinataire 23). Le chemin 31 entre le premier point d'échange 41-1 et le deuxième point d'échange 41-2 comporte une première partie 31a dans le domaine terrestre jusqu'à une première station passerelle 45-1, une deuxième partie 31b dans le domaine spatial entre la première station passerelle 45-1 et une deuxième station passerelle 45-2, et une troisième partie 31c dans le domaine terrestre entre la deuxième station passerelle 45-2 et le deuxième point d'échange 43-2. Le premier point d'échange 43-1 correspond à un point d'entrée 24a vers la première partie 31a, la première station passerelle 45-1 correspond à un point d'entrée 24b vers la deuxième partie 31b, et la deuxième station passerelle 45-2 correspond à un point d'entrée 24c vers la troisième partie 31c.

La figure 11 illustre encore un autre exemple de mise en oeuvre pour un flux de communication depuis un premier satellite 42-1 en orbite non-géostationnaire autour de la Terre vers un point d'échange 43. Le premier satellite 42-1 joue donc le rôle de noeud source 21 tandis que le point d'échange 43 joue le rôle de noeud destinataire 23. Un chemin temporaire 31 reliant le premier satellite 42-1 au point d'échange 43 comporte une première partie 31a formée dans le domaine spatial par un ou plusieurs autres satellites 42 (correspondant à des noeuds intermédiaires 22a appartenant au domaine spatial), et une deuxième partie 31b formée dans le domaine terrestre par un ou plusieurs routeurs 44 (correspondant à des noeuds intermédiaires 22b appartenant au domaine terrestre). Une station passerelle 45 joue le rôle d'un noeud d'entrée 24b pour établir une connexion depuis la première partie 31a dans le domaine spatial vers la deuxième partie 31b dans le domaine terrestre. Dans l'exemple illustré à la figure 11, le premier satellite 42-1 joue non seulement le rôle de noeud source 21 mais aussi le rôle de noeud d'entrée 24a vers la première partie 31a du chemin dans le domaine spatial. Selon une première variante, l'entité d'orchestration 25 peut fournir au premier satellite 42-1 une table de piles de labels dans laquelle chaque pile de labels définit complètement un chemin du noeud source vers le noeud destinataire. Alternativement, selon une deuxième variante, l'entité d'orchestration 25 peut fournir une première table de piles de labels au premier satellite 42-1 pour définir la première partie 31a du chemin, et fournir une deuxième table de piles de labels à la station passerelle 45 pour définir la deuxième partie 31b du chemin (dans ce cas, le dernier label extrait d'une pile de labels de la première table est un pointeur vers la deuxième table pour indiquer à la station passerelle 45 quelle table utiliser pour la deuxième partie 31b du chemin).

Dans les différents exemples décrits précédemment en référence aux figures 3, 7, 8, 10 et 11, le domaine spatial utilise par exemple le protocole DVB (« Digitial Video Broadcasting ») pour les communications montantes/descendantes vers/depuis les satellites 42 et pour les communications entre deux satellites. Le domaine terrestre peut quant à lui reposer sur une technologie de routage de type MPLS (« Multi-Protocol Label Switching »). Le protocole GSE (« Generic Stream Encapsulation ») est utilisé pour ajouter les informations décrivant une pile de labels dans un en-tête d'un paquet de données.

Il convient de noter que les exemples décrits précédemment en référence aux figures 3, 7, 8, 10 et 11 supposent une notion de direction du flux de communication depuis le noeud source 21 vers le noeud destinataire 23.

Certains changements dans la topologie du réseau 10 de communication peuvent ne pas être prédictible, par exemple s'ils sont la conséquence d'une défaillance accidentelle du réseau 10 de communication. On entend par là par exemple qu'au moins une portion de chemin entre un noeud courant et un noeud suivant correspondant au label placé au sommet de la pile de labels encapsulée dans un paquet reçu par le noeud courant est accidentellement indisponible.

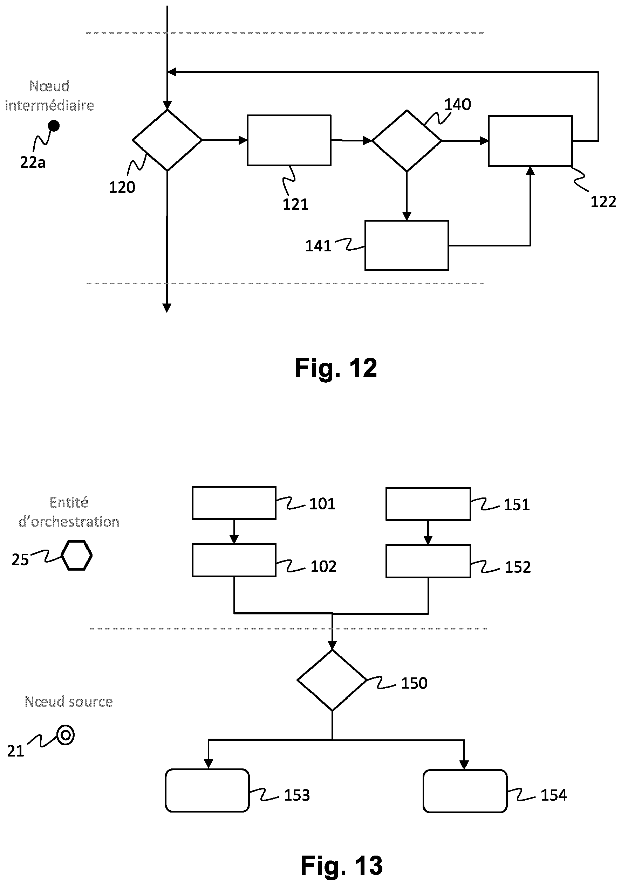

La figure 12 illustre un premier mécanisme de secours, pour le procédé 100 de routage selon l'invention, en cas de défaillance d'une portion d'un chemin envisagé pour le routage d'un flux de communication.

Ce premier mécanisme de secours est mis en oeuvre au niveau d'un noeud intermédiaire 22 (noeud courant). Lorsqu'il est vérifié, à l'étape 120 qu'un paquet reçu comporte une pile de labels non vide, et suite à l'étape d'extraction 121 dudit label de la pile, le procédé comporte une étape de détection 140 s'il existe une défaillance accidentelle pour au moins une portion de chemin entre le noeud courant et le noeud suivant correspondant au label extrait. Si aucune défaillance n'est détectée, alors le paquet est directement transmis à l'étape 122 au noeud suivant. Si en revanche une défaillance est détectée, alors le procédé comporte une étape de remplacement 141 par le noeud courant d'un ou plusieurs labels placés au sommet de la pile par un ou plusieurs labels de remplacement correspondant à un chemin de secours. Les labels de remplacement sont préalablement déterminés et fournis au noeud courant par l'entité d'orchestration 25.

La détection d'une défaillance peut être effectuée via un plan de contrôle basé sur des messages avec demande d'acquittement émis périodiquement sur les différents liens de connexion du réseau. Si un message n'est pas acquitté pendant une certaine période de temps pour un lien particulier, alors le lien est déclaré défectueux. Une base d'informations de routage (« Label Forwarding Information Base », ou LFIB) d'un noeud connecté au lien défectueux peut alors être mise à jour par une entité de contrôle dudit noeud pour rediriger le trafic de façon appropriée sans passer par le lien défectueux.

La figure 13 illustre un deuxième mécanisme de secours, pour le procédé 100 de routage selon l'invention, en cas de défaillance d'une portion du chemin envisagé pour le routage d'un flux de communication.

Pour ce deuxième mécanisme de secours, parallèlement aux étapes précédemment décrites de détermination 101 d'un chemin temporaire entre le noeud source 21 et le noeud destinataire 23 pour chacune d'une pluralité de périodes de temps successives, et de génération 102 d'une table nominale de piles de labels associées respectivement à chaque période de temps, le procédé 100 de routage comporte au niveau de l'entité d'orchestration 25 une détermination 151 d'un chemin de secours pour chaque période de temps, et une génération 152 d'une table de secours de piles de labels associées respectivement aux différents chemins de secours ainsi déterminés. Cette table de secours est également mise à disposition du noeud source 21. Le procédé 100 comporte alors, au niveau du noeud source 21, une détection 150 si une portion au moins du chemin entre le noeud source 21 et le noeud destinataire 23 est devenu accidentellement indisponible (détection d'une défaillance). Si c'est le cas, alors le noeud source 21 utilise la table de secours pour router les paquets de données du flux de communication (étape 154), sinon le noeud source 21 utilise la table nominale (étape 153).

Là encore, la détection 150 d'une défaillance peut être effectuée via un plan de contrôle basé sur des messages avec demande d'acquittement émis périodiquement sur les différents liens de connexion du réseau. Si un message n'est pas acquitté pendant une certaine période de temps pour un lien particulier, alors le lien est déclaré défectueux et l'information est transmise au noeud source 21. Le procédé 100 de routage peut alors alternativement utiliser la table nominale ou la table de secours pour router les paquets de données du flux de communication, selon qu'une défaillance a été détectée ou non sur le chemin entre le noeud source 21 et le noeud destinataire 23.

Le premier mécanisme de secours est notamment avantageux lorsque le temps de transmission au noeud source 21 d'une information relative à une défaillance du réseau 10 de communication est trop longue (cela peut notamment être le cas lorsque la complexité de la topologie du réseau 10 de communication est particulièrement forte). Le deuxième mécanisme de secours présente quant à lui l'avantage de réduire la complexité du procédé 100 de routage au niveau des noeuds intermédiaires 22.

La description ci-avant illustre clairement que, par ses différentes caractéristiques et leurs avantages, la présente invention atteint les objectifs fixés. En particulier, l'invention propose une solution pour garantir l'acheminement de tous les paquets de données d'un flux de communication au sein d'un réseau présentant une topologie variable et prédictible. La solution proposée permet de limiter la complexité du système, notamment par la centralisation d'une majeure partie des étapes de planification de l'acheminement des paquets par une entité d'orchestration.

## Revendications

1. Procédé (100) de routage de paquets de données au sein d'un réseau (10) de communication, ledit réseau comprenant plusieurs noeuds (20), chaque noeud pouvant être connecté au moins temporairement à un ou plusieurs autres noeuds (20) du réseau, ledit procédé (100) étant **caractérisé en ce qu'**il est adapté pour un réseau de communication utilisant une constellation de satellites en orbite non-géostationnaire autour de la Terre, et **en ce qu'**il comporte :
- une détermination (101), par une entité d'orchestration (25), d'une pluralité de chemins (31) temporaires entre au moins un noeud source (21) et au moins un noeud destinataire (23) pour une pluralité de périodes de temps (Pᵢ) successives déterminées, chaque chemin (31) temporaire étant garanti pour une des périodes de temps (Pᵢ) et déterminé en fonction d'une topologie variable et prédictible du réseau (10) de façon à relier ledit noeud source (21) et ledit noeud destinataire (23) en passant par un ou plusieurs noeuds intermédiaires (22) pendant ladite période de temps (Pᵢ),
- une génération (102), par ladite entité d'orchestration (25), d'au moins une table (T) de piles (LSi) de labels, chaque pile (LSi) de labels de la table (T) correspondant à un des chemins (31) temporaires défini pour l'une desdites périodes de temps (Pᵢ) successives déterminées entre ledit noeud source (21) et ledit noeud destinataire (23), chaque label (L_{j,i}) correspondant à un desdits noeuds intermédiaires (22) du chemin (31) temporaire, ladite table (T) de piles (LSi) de labels étant mise à disposition dudit noeud source (21),
- une encapsulation (110), par ledit noeud source (21), dans chaque paquet de données transmis pendant une période de temps (Pᵢ), de la pile (LSi) de labels correspondant à ladite période de temps (Pᵢ) dans la table (T),
- une transmission (111) du paquet de données au noeud intermédiaire (22) correspondant au label présent au sommet de la pile (LSi) de labels,
- à la réception de chaque paquet de données par le noeud intermédiaire (22) correspondant au label présent au sommet de la pile (LSi) de labels encapsulée dans le paquet de données : une extraction (121) dudit label de la pile (LSi) de labels et une transmission (122) du paquet de données à un autre noeud correspondant au label nouvellement placé au sommet de la pile de labels, jusqu'à ce que la pile de labels soit vide.

2. Procédé (100) de routage selon la revendication 1 dans lequel le réseau (10) de communication comporte au moins un premier domaine et un deuxième domaine ; chaque chemin (31) entre ledit noeud source (21) et ledit noeud destinataire (23) comportant une première partie (31a) formée par un ou plusieurs des noeuds intermédiaires (22a) appartenant au premier domaine et une deuxième partie (31b) formée par un ou plusieurs des noeuds intermédiaires (22b) appartenant au deuxième domaine ; le réseau (10) comportant, pour chaque partie, un noeud d'entrée (24a, 24b), correspondant au noeud source ou à un des noeuds intermédiaires, permettant d'établir une connexion vers ladite partie (31a, 31b) ; ladite génération (102) d'au moins une table (T) de piles (LSi) de labels comportant au moins deux générations, à savoir :
- une génération (102a), par l'entité d'orchestration (25), d'une première table de piles de labels définissant, pour chacune d'une première pluralité de périodes de temps successives déterminées, une première partie (31a) d'un chemin (31) temporaire entre le noeud source (21) et le noeud destinataire (23), ladite première partie (31a) étant déterminée en fonction de la topologie variable et prédictible du réseau (10) de façon à relier un noeud d'entrée (24a) vers la première partie (31a) et un noeud d'entrée (24b) vers une deuxième partie (31b) dudit chemin (31) temporaire,
- une génération (102b), par l'entité d'orchestration (25), d'une deuxième table de piles de labels définissant, pour chacune d'une deuxième pluralité de périodes de temps successives déterminées, ladite deuxième partie (31b) du chemin (31) temporaire, ladite deuxième partie (31b) étant déterminée en fonction de la topologie variable et prédictible du réseau (10) de façon à relier le noeud d'entrée (24b) vers la deuxième partie (31b) et le noeud destinataire (23),
le procédé (100) de routage comportant en outre :
- une fourniture (103a) de la première table de piles de labels au noeud d'entrée (24a) vers la première partie (31a),
- une fourniture (103b) de la deuxième table de piles de labels au noeud d'entrée (24b) vers la deuxième partie (31b) ;
et dans laquelle un label positionné à la base d'une pile de labels de la première table est un pointeur identifiant la deuxième table de piles de label.

3. Procédé (100) de routage selon l'une des revendication 1 ou 2 dans lequel le réseau (10) de communication est un réseau de communication par satellite comportant au moins un domaine spatial dont les noeuds sont formés par des satellites (42) en orbite non-géostationnaire autour de la Terre, et au moins un domaine terrestre dont une partie au moins des noeuds sont formés par des stations passerelles (45), des routeurs (44), des points d'échange (43), et/ou des terminaux utilisateurs (41) de communication par satellite.

4. Procédé (100) de routage selon la revendication 3 dans lequel un routage de type explicite est utilisé pour définir, dans ledit domaine spatial, au moins une partie du chemin (31) entre le noeud source (21) et le noeud destinataire (23), étant entendu que pour un routage de type explicite un label est explicitement associé à chaque noeud intermédiaire (22a, 22b) appartenant à ladite partie du chemin.

5. Procédé (100) de routage selon l'une des revendications 3 ou 4 dans lequel un routage de type implicite est utilisé pour définir, dans ledit domaine terrestre, au moins une partie du chemin (31) entre le noeud source (21) et le noeud destinataire (23), étant entendu que pour un routage de type implicite au moins un noeud intermédiaire (22a, 22b) appartenant à ladite partie du chemin n'est pas explicitement associé à un label.

6. Procédé (100) de routage selon l'une des revendications 3 à 5 dans lequel le noeud source (21) est un terminal utilisateur (41) de communication par satellite, le noeud destinataire (23) est un point d'échange (43), une première partie (31a) du chemin (31) entre le terminal utilisateur (41) et le point d'échange (43) est formée dans le domaine spatial par un ou plusieurs satellites (42), une station passerelle (45) assure le rôle de point d'entrée (24b) vers une deuxième partie (31b) du chemin formée dans le domaine terrestre par un ou plusieurs routeurs (44) jusqu'au point d'échange (43).

7. Procédé (100) de routage selon l'une des revendications 3 à 5 dans lequel le noeud source (21) est un premier point d'échange (43-1), le noeud destinataire (23) est un deuxième point d'échange (43-2), un chemin (31) entre le premier point d'échange (41-1) et le deuxième point d'échange (41-2) comporte une première partie (31a) dans le domaine terrestre jusqu'à une première station passerelle (45-1), une deuxième partie (31b) dans le domaine spatial entre la première station passerelle (45-1) et une deuxième station passerelle (45-2), et une troisième partie (31c) dans le domaine terrestre entre la deuxième station passerelle (45-2) et le deuxième point d'échange (43-2).

8. Procédé (100) de routage selon l'une des revendications 3 à 5 dans lequel le noeud source (21) est un premier terminal utilisateur (41-1) de communication par satellite, le noeud destinataire (23) est un deuxième terminal utilisateur (41-2) de communication par satellite, les noeuds intermédiaires (22) du chemin (31) entre le noeud source (21) et le noeud destinataire (23) appartenant exclusivement au domaine spatial.

9. Procédé (100) de routage selon l'une des revendications 3 à 5 dans lequel le noeud source (21) est un satellite en orbite non-géostationnaire autour de la Terre et le noeud destinataire (23) est un terminal utilisateur (41) de communication par satellite ou un point d'échange (43).

10. Procédé (100) de routage selon l'une des revendications 1 à 9 dans lequel, lorsqu'au moins une portion de chemin entre un noeud courant et un noeud suivant correspondant au label placé au sommet de la pile de labels encapsulée dans un paquet reçu par le noeud courant est accidentellement indisponible, le procédé comporte un remplacement (141) par le noeud courant d'un ou plusieurs labels placés au sommet de la pile par un ou plusieurs labels de remplacement correspondant à un chemin de secours, lesdits labels de remplacement ayant été préalablement déterminés et fournis au noeud courant par l'entité d'orchestration (25).

11. Procédé (100) de routage selon l'une des revendications 1 à 9 comportant en outre une génération (151) par l'entité d'orchestration (25) d'une table de secours de piles de labels, ladite table de secours étant utilisée par le noeud source (23) lorsqu'une portion au moins du chemin entre le noeud source (21) et le noeud destinataire (23) devient accidentellement indisponible.

12. Entité d'orchestration (25) pour router des paquets de données au sein d'un réseau (10) de communication comprenant plusieurs noeuds (20), chaque noeud pouvant être connecté au moins temporairement à un ou plusieurs autres noeuds (20) du réseau (10), ladite entité d'orchestration (25) étant **caractérisée en ce qu'**elle est adaptée pour un réseau de communication utilisant une constellation de satellites en orbite géostationnaire autour de la Terre, et qu'elle est configurée pour :
- déterminer une pluralité de chemins (31) temporaires entre au moins un noeud source (21) et au moins un noeud destinataire (23) pour une pluralité de périodes de temps (Pᵢ) successives déterminées, chaque chemin (31) temporaire étant garanti pour une période de temps (Pᵢ) et déterminé en fonction d'une topologie variable et prédictible du réseau (10) de façon à relier ledit noeud source (21) et ledit noeud destinataire (23) en passant par un ou plusieurs noeuds intermédiaires (22) pendant ladite période de temps (Pᵢ),
- générer au moins une table (T) de piles (LSi) de labels, chaque pile (LSi) de labels de la table (T) correspondant à un des chemins (31) temporaires défini pour l'une desdites périodes de temps (Pᵢ) successives déterminées, chaque label (L_{j,i}) correspondant à un des noeuds intermédiaires du chemin (31) temporaire
- fournir ladite table (T) de piles (LSi) de labels audit noeud source (21).

13. Entité d'orchestration (25) selon la revendication 12 pour laquelle, lorsque le réseau (10) de communication comporte au moins un premier domaine et un deuxième domaine, chaque chemin (31) entre le noeud source (21) et le noeud destinataire (23) comportant une première partie (31a) formée par un ou plusieurs des noeuds intermédiaires (22a) appartenant au premier domaine et une deuxième partie (31b) formée par un ou plusieurs des noeuds intermédiaires (22b) appartenant au deuxième domaine, le réseau (10) comportant, pour chaque partie (31a, 31b), un noeud d'entrée (24a, 24b), correspondant au noeud source ou à un des noeuds intermédiaires, permettant d'établir une connexion vers ladite partie, l'entité d'orchestration (25), lors de la génération de ladite au moins une table (T) de piles (LSi) de labels, est configurée pour :
- générer une première table de piles de labels définissant, pour chacune d'une première pluralité de périodes de temps successives déterminées, une première partie (31a) d'un chemin (31) temporaire entre le noeud source (21) et le noeud destinataire (23), ladite première partie (31a) étant déterminée en fonction de la topologie variable et prédictible du réseau (10) de façon à relier un noeud d'entrée (24a) vers la première partie et un noeud d'entrée (24b) vers une deuxième partie (31b) du chemin (31) temporaire,
- générer une deuxième table de piles de labels définissant, pour chacune d'une deuxième pluralité de périodes de temps successives déterminées, ladite deuxième partie (31b) du chemin (31) temporaire étant déterminée en fonction de la topologie variable et prédictible du réseau (10) de façon à relier le noeud d'entrée (24b) vers la deuxième partie (31b) et le noeud destinataire (23),
l'entité d'orchestration (25) étant en outre configurée pour :
- envoyer la première table de piles de labels au noeud d'entrée (24a) vers la première partie (31a),
- envoyer la deuxième table de piles de labels au noeud d'entrée (24b) vers la deuxième partie ;
un label positionné à la base d'une pile de labels de la première table est un pointeur identifiant la deuxième table de piles de label.

14. Réseau (10) de communication présentant une topologie variable et prédictible, comprenant plusieurs noeuds (20), chaque noeud (20) pouvant être connecté au moins temporairement à un ou plusieurs autres noeuds (20) du réseau, ledit réseau permettant la transmission d'un paquet de données d'un flux de communication entre un noeud source (21) et un noeud destinataire (23) à travers un chemin reliant le noeud source au noeud destinataire en passant par un ou plusieurs noeuds intermédiaires (22), ledit réseau (10) de communication étant **caractérisé en ce que** :
- le réseau (10) comporte une entité d'orchestration (25) selon l'une des revendications 12 à 13 ;
- le noeud source (21) est configuré pour encapsuler, pendant chaque période de temps (Pᵢ), la pile (LSi) de labels correspondante dans chaque paquet de données transmis pendant ladite période de temps (Pᵢ) ; et
- le noeud intermédiaire (22) correspondant au label (L_{j,i}) présent au sommet de la pile (LSᵢ) de labels encapsulée dans un paquet de données est configuré pour extraire ledit label de la pile de labels et pour transmettre le paquet de données à un autre noeud correspondant au label nouvellement placé au sommet de la pile de labels, jusqu'à ce que la pile de labels soit vide.

15. Réseau (10) de communication selon la revendication 14 dans lequel le réseau (10) de communication est un réseau de communication par satellite comportant un domaine spatial dont les noeuds sont formés par des satellites (42) en orbite non-géostationnaire autour de la Terre, et un domaine terrestre dont une partie au moins des noeuds sont formés par des stations passerelles (45), des routeurs (44), des points d'échange (43), et/ou des terminaux utilisateurs (41) de communication par satellite.

## Patentansprüche

1. Verfahren (100) zur Leitweglenkung von Datenpaketen innerhalb eines Kommunikationsnetzes (10), wobei das Netz mehrere Knoten (20) umfasst, wobei jeder Knoten mindestens vorübergehend mit einem oder mehreren anderen Knoten (20) des Netzes verbunden werden kann, wobei das Verfahren (100) **dadurch gekennzeichnet ist, dass** es für ein Kommunikationsnetz angepasst ist, das eine Satellitenkonstellation in einer nicht geostationären Umlaufbahn um die Erde herum verwendet, und dadurch, dass es Folgendes beinhaltet:
- eine Bestimmung (101) durch eine Orchestrierungseinheit (25) einer Vielzahl von vorübergehenden Wegen (31) zwischen mindestens einem Quellknoten (21) und mindestens einem Zielknoten (23) für eine Vielzahl von bestimmten aufeinanderfolgenden Zeiträumen (Pᵢ), wobei jeder vorübergehende Weg (31) für einen der Zeiträume (Pᵢ) garantiert ist, und in Abhängigkeit von einer variablen und vorhersagbaren Topologie des Netzes (10) derart bestimmt wird, um während des Zeitraums (Pᵢ) den Quellknoten (21) und den Zielknoten (23) über einen oder mehrere Zwischenknoten (22) zu verbinden,
- eine Generierung (102) durch die Orchestrierungseinheit (25) mindestens eines Verzeichnisses (T) mit Label-Stapeln (LSi), wobei jeder Label-Stapel (LSi) des Verzeichnisses (T) einem der vorübergehenden Wege (31) entspricht, der für einen der aufeinanderfolgenden Zeiträume (Pᵢ) definiert ist, die zwischen dem Quellknoten (21) und dem Zielknoten (23) bestimmt werden, wobei jedes Label (L_{j,i}) einem der Zwischenknoten (22) des vorübergehenden Weges (31) entspricht, wobei das Verzeichnis (T) mit Label-Stapeln (LSi) dem Quellknoten (21) zur Verfügung gestellt wird,
- eine Einkapselung (110) durch den Quellknoten (21) in jedem Datenpaket, das während eines Zeitraums (Pᵢ) übertragen wird, des Label-Stapels (LSi), der dem Zeitraum (Pᵢ) entspricht, in dem Verzeichnis (T),
- eine Übertragung (111) des Datenpakets an den Zwischenknoten (22) entsprechend dem Label, das ganz oben am Label-Stapel (LSi) vorhanden ist,
- beim Empfang eines jeden Datenpakets durch den Zwischenknoten (22) entsprechend dem Label, das ganz oben am Label-Stapel (LSi) vorhanden ist, der in dem Datenpaket eingekapselt ist: ein Extrahieren (121) des Labels aus dem Label-Stapel (LSi) und eine Übertragung (122) des Datenpakets an einen anderen Knoten entsprechend dem ganz oben am Label-Stapel neu platzierten Label, bis der Label-Stapel leer ist.

2. Verfahren (100) zur Leitweglenkung nach Anspruch 1, wobei das Kommunikationsnetz (10) mindestens eine erste Domäne und eine zweite Domäne beinhaltet;
wobei jeder Weg (31) zwischen dem Quellknoten (21) und dem Zielknoten (23) einen ersten Teil (31a) beinhaltet, der durch einen oder mehrere der Zwischenknoten (22a) gebildet wird, die der ersten Domäne angehöhren, und einen zweiten Teil (31b), der durch einen oder mehrere der Zwischenknoten (22b) gebildet wird, die der zweiten Domäne angehöhren; wobei das Netz (10) für jeden Teil einen Eingangsknoten (24a, 24b) beinhaltet, der dem Quellknoten oder einem der Zwischenknoten entspricht, der es ermöglicht, eine Verbindung zu dem Teil (31a, 31b) aufzubauen; wobei die Generierung (102) mindestens eines Verzeichnisses (T) mit Label-Stapeln (LSi) mindestens zwei Generierungen beinhaltet, nämlich:
- eine Generierung (102a) durch die Orchestrierungseinheit (25) eines ersten Verzeichnisses mit Label-Stapeln, die für jede einer ersten Vielzahl von bestimmten aufeinanderfolgenden Zeiträumen einen ersten Teil (31a) eines vorübergehenden Weges (31) zwischen dem Quellknoten (21) und dem Zielknoten (23) definiert, wobei der erste Teil (31a) in Abhängigkeit von der variablen und vorhersagbaren Topologie des Netzes (10) derart bestimmt wird, um einen Eingangsknoten (24a) mit dem ersten Teil (31a) und einen Eingangsknoten (24b) mit einem zweiten Teil (31b) des vorübergehenden Weges (31) zu verbinden,
- eine Generierung (102b) durch die Orchestrierungseinheit (25) eines zweiten Verzeichnisses mit Label-Stapeln, die für jede einer zweiten Vielzahl von bestimmten aufeinanderfolgenden Zeiträumen einen zweiten Teil (31b) des vorübergehenden Weges (31) definiert, wobei der zweite Teil (31b) in Abhängigkeit von der variablen und vorhersagbaren Topologie des Netzes (10) derart bestimmt wird, um den Eingangsknoten (24b) mit dem zweiten Teil (31b) und dem Zielknoten (23) zu verbinden,
wobei das Verfahren (100) zur Leitweglenkung weiter Folgendes beinhaltet:
- eine Bereitstellung (103a) des ersten Verzeichnisses mit Label-Stapeln für den Eingangsknoten (24a) zum ersten Teil (31a),
- eine Bereitstellung (103b) des zweiten Verzeichnisses mit Label-Stapeln für den Eingangsknoten (24b) zum zweiten Teil (31b);
und wobei ein Label, das an der Basis eines Label-Stapels des ersten Verzeichnisses positioniert ist, ein Zeiger ist, der das zweite Verzeichnis mit Label-Stapeln identifiziert.

3. Verfahren (100) zur Leitweglenkung nach einem der Ansprüche 1 oder 2, wobei das Kommunikationsnetz (10) ein Satellitenkommunikationsnetz ist, das mindestens eine Weltraumdomäne beinhaltet, deren Knoten durch Satelliten (42) in einer nicht geostationären Umlaufbahn um die Erde herum gebildet sind, und mindestens eine terrestrische Domäne, von der mindestens ein Teil der Knoten durch Gateway-Stationen (45), Router (44), Austauschpunkte (43) und/oder Nutzerendgeräte (41) zur Satellitenkommunikation gebildet werden.

4. Verfahren (100) zur Leitweglenkung nach Anspruch 3, wobei eine Leitweglenkung der expliziten Art verwendet wird, um in der Weltraumdomäne mindestens einen Teil des Weges (31) zwischen dem Quellknoten (21) und dem Zielknoten (23) zu definieren, wobei vorausgesetzt wird, dass für eine Leitweglenkung der expliziten Art ein Label ausdrücklich einem jeden Zwischenknoten (22a, 22b) zugewiesen wird, der dem Teil des Weges angehört.

5. Verfahren (100) zur Leitweglenkung nach einem der Ansprüche 3 oder 4, wobei eine Leitweglenkung der impliziten Art verwendet wird, um in der terrestrischen Domäne mindestens einen Teil des Weges (31) zwischen dem Quellknoten (21) und dem Zielknoten (23) zu definieren, wobei vorausgesetzt wird, dass für eine Leitweglenkung der impliziten Art mindestens ein Zwischenknoten (22a, 22b), der dem Teil des Weges angehört, nicht explizit einem Label zugewiesen wird.

6. Verfahren (100) zur Leitweglenkung nach einem der Ansprüche 3 bis 5, wobei der Quellknoten (21) ein Nutzerendgerät (41) zur Satellitenkommunikation ist, der Zielknoten (23) ein Austauschpunkt (43) ist, ein erster Teil (31a) des Weges (31) zwischen dem Nutzerendgerät (41) und dem Austauschpunkt (43) in der Weltraumdomäne durch einen oder mehrere Satelliten (42) gebildet wird, eine Gateway-Station (45) die Rolle eines Eingangspunktes (24b) zu einem zweiten Teil (31b) des Weges übernimmt, der in der terrestrischen Domäne durch einen oder mehrere Router (44) bis zum Austauschpunkt (43) gebildet wird.

7. Verfahren (100) zur Leitweglenkung nach einem der Ansprüche 3 bis 5, wobei der Quellknoten (21) ein erster Austauschpunkt (43-1) ist, der Zielknoten (23) ein zweiter Austauschpunkt (43-2) ist, ein Weg (31) zwischen dem ersten Austauschpunkt (41-1) und dem zweiten Austauschpunkt (41-2) einen ersten Teil (31a) in der terrestrischen Domäne bis zu einer ersten Gateway-Station (45-1) beinhaltet, einen zweiten Teil (31b) in der Weltraumdomäne zwischen der ersten Gateway-Station (45-1) und einer zweiten Gateway-Station (45-2), und einen dritten Teil (31c) in der terrestrischen Domäne zwischen der zweiten Gateway-Station (45-2) und dem zweiten Austauschpunkt (43-2).

8. Verfahren (100) zur Leitweglenkung nach einem der Ansprüche 3 bis 5, wobei der Quellknoten (21) ein erstes Nutzerendgerät (41-1) zur Satellitenkommunikation ist, der Zielknoten (23) ein zweites Nutzerendgerät (41-2) zur Satellitenkommunikation ist, die Zwischenknoten (22) des Weges (31) zwischen dem Quellknoten (21) und dem Zielknoten (23) ausschließlich der Weltraumdomäne angehören.

9. Verfahren (100) zur Leitweglenkung nach einem der Ansprüche 3 bis 5, wobei der Quellknoten (21) ein Satellit in der nicht geostationären Umlaufbahn um die Erde herum ist und der Zielknoten (23) ein Nutzerendgerät (41) zur Satellitenkommunikation oder ein Austauschpunkt (43) ist.

10. Verfahren (100) zur Leitweglenkung nach einem der Ansprüche 1 bis 9, wobei, wenn mindestens ein Wegabschnitt zwischen einem laufenden Knoten und einem folgenden Knoten, der dem Label entspricht, das ganz oben auf dem eingekapselten Label-Stapel in einem Paket platziert ist, das durch den laufenden Knoten empfangen wird, zufälligerweise nicht verfügbar ist, das Verfahren einen Ersatz (141) durch den laufenden Knoten eines oder mehrerer Labels, die ganz oben auf dem Stapel platziert sind, durch ein oder mehrere Ersatz-Labels beinhaltet, die einem Rettungsweg entsprechen, wobei die Ersatz-Labels zuvor bestimmt worden, und dem laufenden Knoten durch die Orchestrierungseinheit (25) bereitgestellt worden sind.

11. Verfahren (100) zur Leitweglenkung nach einem der Ansprüche 1 bis 9, weiter eine Generierung (151) durch die Orchestrierungseinheit (25) eines Rettungsverzeichnisses mit Label-Stapeln beinhaltend, wobei das Rettungsverzeichnis von dem Quellknoten (23) verwendet wird, wenn mindestens ein Abschnitt des Weges zwischen dem Quellknoten (21) und dem Zielknoten (23) zufälligerweise nicht verfügbar wird.

12. Orchestrierungseinheit (25) zur Leitweglenkung der Datenpakete innerhalb eines Kommunikationsnetzes (10), das mehrere Knoten (20) umfasst, wobei jeder Knoten mindestens vorübergehend mit einem oder mehreren anderen Knoten (20) des Netzes (10) verbunden werden kann, wobei die Orchestrierungseinheit (25) **dadurch gekennzeichnet ist, dass** sie für ein Kommunikationsnetz angepasst ist, das eine Satellitenkonstellation in einer geostationären Umlaufbahn um die Erde herum verwendet, und dadurch, dass sie konfiguriert ist zum:
- Bestimmen einer Vielzahl von vorübergehenden Wegen (31) zwischen mindestens einem Quellknoten (21) und mindestens einem Zielknoten (23) für eine Vielzahl von bestimmten aufeinanderfolgenden Zeiträumen (Pᵢ), wobei jeder vorübergehende Weg (31) für einen der Zeiträume (Pᵢ) garantiert ist, und in Abhängigkeit von einer variablen und vorhersagbaren Topologie des Netzes (10) derart bestimmt wird, um während des Zeitraums (Pᵢ) den Quellknoten (21) und den Zielknoten (23) über einen oder mehrere Zwischenknoten (22) zu verbinden,
- Generieren mindestens eines Verzeichnisses (T) mit Label-Stapeln (LSi), wobei jeder Label-Stapel (LSi) des Verzeichnisses (T) einem der vorübergehenden Wege (31) entspricht, der für einen der aufeinanderfolgenden Zeiträume (Pᵢ) definiert ist, wobei jedes Label (L_{j,i}) einem der Zwischenknoten des vorübergehenden Weges (31) entspricht,
- Bereitstellen des Verzeichnisses (T) mit Label-Stapeln (LSᵢ) für den Quellknoten (21).

13. Orchestrierungseinheit (25) nach Anspruch 12, wobei wenn das Kommunikationsnetz (10) mindestens eine erste Domäne und eine zweite Domäne beinhaltet, jeder Weg (31) zwischen dem Quellknoten (21) und dem Zielknoten (23) einen ersten Teil (31a) beinhaltet, der durch einen oder mehrere der Zwischenknoten (22a) gebildet wird, die der ersten Domäne angehöhren, und einen zweiten Teil (31b), der durch einen oder mehrere der Zwischenknoten (22b) gebildet wird, die der zweiten Domäne angehöhren, wobei das Netz (10) für jeden Teil (31a, 31b) einen Eingangsknoten (24a, 24b) beinhaltet, der dem Quellknoten oder einem der Zwischenknoten entspricht, der es ermöglicht, eine Verbindung zu dem Teil aufzubauen, wobei die Orchestrierungseinheit (25) bei der Generierung des mindestens einen Verzeichnisses (T) mit Label-Stapeln (LSi) konfiguriert ist zum:
- Generieren eines ersten Verzeichnisses mit Label-Stapeln, die für jede einer ersten Vielzahl von bestimmten aufeinanderfolgenden Zeiträumen einen ersten Teil (31a) eines vorübergehenden Weges (31) zwischen dem Quellknoten (21) und dem Zielknoten (23) definiert, wobei der erste Teil (31a) in Abhängigkeit von der variablen und vorhersagbaren Topologie des Netzes (10) derart bestimmt wird, um einen Eingangsknoten (24a) zum ersten Teil (31a) und einen Eingangsknoten (24b) mit einem zweiten Teil (31b) des vorübergehenden Weges (31) zu verbinden,
- Generieren eines zweiten Verzeichnisses mit Label-Stapeln, die für jede einer zweiten Vielzahl von bestimmten aufeinanderfolgenden Zeiträumen einen zweiten Teil (31b) des vorübergehenden Weges (31) definiert, wobei der zweite Teil (31b) in Abhängigkeit von der variablen und vorhersagbaren Topologie des Netzes (10) derart bestimmt wird, um den Eingangsknoten (24b) mit dem zweiten Teil (31b) und dem Zielknoten (23) zu verbinden,
wobei die Orchestrierungseinheit (25) weiter konfiguriert ist zum:
- Senden des ersten Verzeichnisses mit Label-Stapeln zum Eingangsknoten (24a) zum ersten Teil (31a),
- Senden des zweiten Verzeichnisses mit Label-Stapeln zum Eingangsknoten (24b) zum zweiten Teil;
wobei ein Label, das an der Basis eines Label-Stapels des ersten Verzeichnisses positioniert ist, ein Zeiger ist, der das zweite Verzeichnis mit Label-Stapeln identifiziert.

14. Kommunikationsnetz (10), das eine variable und vorhersagbare Topologie aufweist, mehrere Knoten (20) umfassend, wobei jeder Knoten (20) mindestens vorübergehend mit einem oder mehreren anderen Knoten (20) des Netzes verbunden werden kann, wobei das Netz die Übertragung eines Datenpaketes eines Kommunikationsflusses zwischen einem Quellknoten (21) und einem Zielknoten (23) über einen Weg ermöglicht, der den Quellknoten über einen oder mehrere Zwischenknoten (22) mit dem Zielknoten verbindet, wobei das Kommunikationsnetz (10) **dadurch gekennzeichnet ist, dass**:
- das Netz (10) eine Orchestrierungseinheit (25) nach einem der Ansprüche 12 bis 13 beinhaltet;
- der Quellknoten (21) konfiguriert ist, um in jedem Zeitraum (Pᵢ) den entsprechenden Label-Stapel (LSi) in jedem Datenpaket, das während des Zeitraums (Pᵢ) übertragen wird, einzukapseln; und
- der Zwischenknoten (22), der dem Label (L_{j,i}) entspricht, das ganz oben am eingekapselten Label-Stapel (LSi) in einem Datenpaket vorhanden ist, konfiguriert ist, um das Label aus dem Label-Stapel zu extrahieren, und das Datenpaket an einen anderen Knoten entsprechend dem ganz oben am Label-Stapel neu platzierten Label zu übertragen, bis der Label-Stapel leer ist.

15. Kommunikationsnetz (10) nach Anspruch 14, wobei das Kommunikationsnetz (10) ein Satellitenkommunikationsnetz ist, das eine Weltraumdomäne beinhaltet, deren Knoten durch Satelliten (42) in einer nicht geostationären Umlaufbahn um die Erde herum gebildet sind, und eine terrestrische Domäne, von der mindestens ein Teil der Knoten durch Gateway-Stationen (45), Router (44), Austauschpunkte (43) und/oder Nutzerendgeräte (41) zur Satellitenkommunikation gebildet werden.

## Claims

1. A method (100) for routing data packets within a communication network (10), said network comprising several nodes (20), each node capable of being connected at least temporarily to one or more other nodes (20) of the network, said method (100) being **characterised in that** it is adapted for a communication network using a constellation of satellites in non-geostationary orbit around the Earth, and **in that** it includes:
- a determination (101), by an orchestration entity (25), of a plurality of temporary paths (31) between at least one source node (21) and at least one destination node (23) for a plurality of determined successive time periods (Pᵢ), each temporary path (31) being guaranteed for one of the time periods (Pᵢ) and determined as a function of a variable and predictable topology of the network (10) so as to connect said source node (21) and said destination node (23) via one or more intermediate nodes (22) during said time period (Pᵢ),
- a generation (102), by said orchestration entity (25), of at least one table (T) of label stacks (LSᵢ), each label stack (LSi) of the table (T) corresponding to one of the temporary paths (31) defined for one of said determined successive time periods (Pᵢ) between said source node (21) and said destination node (23), each label (L_{j,i}) corresponding to one of said intermediate nodes (22) of the temporary path (31), said table (T) of label stacks (LSi) being provided to said source node (21),
- an encapsulation (110), by said source node (21), in each data packet transmitted during a time period (Pᵢ), of the label stack (LSi) corresponding to said time period (Pᵢ) in the table (T),
- a transmission (111) of the data packet to the intermediate node (22) corresponding to the label present at the top of the label stack (LSi),
- upon reception of each data packet by the intermediate node (22) corresponding to the label present at the top of the label stack (LSi) encapsulated in the data packet: an extraction (121) of said label from the label stack (LSi) and a transmission (122) of the data packet to another node corresponding to the label newly placed at the top of the label stack, until the label stack is empty.

2. The routing method (100) according to claim 1, wherein the communication network (10) includes at least a first domain and a second domain; each path (31) between said source node (21) and said destination node (23) including a first portion (31a) formed by one or more of the intermediate nodes (22a) belonging to the first domain and a second portion (31b) formed by one or more of the intermediate nodes (22b) belonging to the second domain; the network (10) including, for each portion, an input node (24a, 24b), corresponding to the source node or to one of the intermediate nodes, allowing establishing a connection to said portion (31a, 31b); said generation (102) of at least one table (T) of label stacks (LSi) including at least two generations, namely:
- a generation (102a), by the orchestration entity (25), of a first table of label stacks defining, for each of a first plurality of determined successive time periods, a first portion (31a) of a temporary path (31) between the source node (21) and the destination node (23), said first portion (31a) being determined as a function of the variable and predictable topology of the network (10) so as to connect an input node (24a) to the first portion (31a) and an input node (24b) to a second portion (31b) of said temporary path (31),
- a generation (102b), by the orchestration entity (25), of a second table of label stacks defining, for each of a second plurality of determined successive time periods, said second portion (31b) of the temporary path (31), said second portion (31b) being determined as a function of the variable and predictable topology of the network (10) so as to connect the input node (24b) to the second portion (31b) and the destination node (23),
the routing method (100) further including:
- a supply (103a) of the first table of label stacks at the input node (24a) to the first portion (31a),
- a supply (103b) of the second table of label stacks at the input node (24b) to the second portion (31b);
and wherein a label positioned at the base of a label stack of the first table is a pointer identifying the second table of label stacks.

3. The routing method (100) according to one of claims 1 or 2, wherein the communication network (10) is a satellite communication network including at least one spatial domain whose nodes are formed by satellites (42) in non-geostationary orbit around the Earth, and at least one terrestrial domain at least part of the nodes of which are formed by gateway stations (45), routers (44), exchange points (43), and/or user terminals (41) for satellite communication.

4. The routing method (100) according to claim 3, wherein an explicit type routing is used to define, in said spatial domain, at least one portion of the path (31) between the source node (21) and the destination node (23), it being understood that for an explicit type routing a label is explicitly associated with each intermediate node (22a, 22b) belonging to said portion of the path.

5. The routing method (100) according to one of claims 3 or 4, wherein an implicit type routing is used to define, in said terrestrial domain, at least one portion of the path (31) between the source node (21) and the destination node (23), it being understood that for an implicit type routing at least one intermediate node (22a, 22b) belonging to said portion of the path is not explicitly associated with a label.

6. The routing method (100) according to one of claims 3 to 5, wherein the source node (21) is a satellite communication user terminal (41), the destination node (23) is an exchange point (43), a first portion (31a) of the path (31) between the user terminal (41) and the exchange point (43) is formed in the spatial domain by one or more satellites (42), a gateway station (45) serves as an entry point (24b) to a second portion (31b) of the path formed in the terrestrial domain by one or more routers (44) up to the exchange point (43).

7. The routing method (100) according to one of claims 3 to 5, wherein the source node (21) is a first exchange point (43-1), the destination node (23) is a second exchange point (43-2), a path (31) between the first exchange point (41-1) and the second exchange point (41-2) includes a first portion (31a) in the terrestrial domain up to a first gateway station (45-1), a second portion (31b) in the spatial domain between the first gateway station (45-1) and a second gateway station (45-2), and a third portion (31c) in the terrestrial domain between the second gateway station (45-2) and the second exchange point (43-2).

8. The routing method (100) according to one of claims 3 to 5, wherein the source node (21) is a first satellite communication user terminal (41-1), the destination node (23) is a second satellite communication user terminal (41-2), the intermediate nodes (22) of the path (31) between the source node (21) and the destination node (23) belonging exclusively to the spatial domain.

9. The routing method (100) according to one of claims 3 to 5, wherein the source node (21) is a satellite in non-geostationary orbit around the Earth and the destination node (23) is a satellite communication user terminal (41) or an exchange point (43).

10. The routing method (100) according to one of claims 1 to 9, wherein, when at least one portion of the path between a current node and a next node corresponding to the label placed at the top of the label stack encapsulated in a packet received by the current node is accidentally unavailable, the method includes a replacement (141) by the current node of one or more labels placed at the top of the stack by one or more replacement labels corresponding to an emergency path, said replacement labels having been determined beforehand and supplied to the current node by the orchestration entity (25).

11. The routing method (100) according to one of claims 1 to 9, further including a generation (151) by the orchestration entity (25) of an emergency table of label stacks, said emergency table being used by the source node (23) when at least one portion of the path between the source node (21) and the destination node (23) accidentally becomes unavailable.

12. An orchestration entity (25) for routing data packets within a communication network (10) comprising several nodes (20), each node capable of being connected at least temporarily to one or more other nodes (20) of the network (10), said orchestration entity (25) being **characterised in that** it is adapted for a communication network using a constellation of satellites in geostationary orbit around the Earth, and that it is configured to:
- determine a plurality of temporary paths (31) between at least one source node (21) and at least one destination node (23) for a plurality of determined successive time periods (Pᵢ), each temporary path (31) being guaranteed for a time period (Pᵢ) and determined as a function of a variable and predictable topology of the network (10) so as to connect said source node (21) and said destination node (23) via one or more intermediate nodes (22) during said time period (Pᵢ),
- generate at least one table (T) of label stacks (LSi), each label stack (LSi) of the table (T) corresponding to one of the temporary paths (31) defined for one of said determined successive time periods (Pᵢ), each label (L_{j,i}) corresponding to one of the intermediate nodes of the temporary path (31)
- supply said table (T) of label stacks (LSi) to said source node (21).

13. The orchestration entity (25) according to claim 12 for which, when the communication network (10) includes at least a first domain and a second domain, each path (31) between the source node (21) and the destination node (23) including a first portion (31a) formed by one or more of the intermediate nodes (22a) belonging to the first domain and a second portion (31b) formed by one or more of the intermediate nodes (22b) belonging to the second domain, the network (10) including, for each portion (31a, 31b), an input node (24a, 24b), corresponding to the source node or to one of the intermediate nodes, allowing establishing a connection to said portion, the orchestration entity (25) is configured, during the generation of said at least one table (T) of label stacks (LSi), to:
- generate a first table of label stacks defining, for each of a first plurality of determined successive time periods, a first portion (31a) of a temporary path (31) between the source node (21) and the destination node (23), said first portion (31a) being determined as a function of the variable and predictable topology of the network (10) so as to connect an input node (24a) to the first portion and an input node (24b) to a second portion (31b) of the temporary path (31),
- generate a second table of label stacks defining, for each of a second plurality of determined successive time periods, said second portion (31b) of the temporary path (31) being determined as a function of the variable and predictable topology of the network (10) so as to connect the input node (24b) to the second portion (31b) and the destination node (23),
the orchestration entity (25) being further configured to:
- send the first table of label stacks at the input node (24a) to the first portion (31a),
- send the second table of label stacks at the input node (24b) to the second portion;
a label positioned at the base of a label stack of the first table is a pointer identifying the second table of label stacks.

14. A communication network (10) having a variable and predictable topology, comprising several nodes (20), each node (20) capable of being connected at least temporarily to one or more other nodes (20) of the network, said network enabling the transmission of a data packet of a communication stream between a source node (21) and a destination node (23) through a path connecting the source node to the destination node via one or more intermediate nodes (22), said communication network (10) being **characterised in that:**
- the network (10) includes an orchestration entity (25) according to one of claims 12 to 13;
- the source node (21) is configured to encapsulate, during each time period (Pᵢ), the corresponding label stack (LSi) in each data packet transmitted during said time period (Pᵢ); and
- the intermediate node (22) corresponding to the label (L_{j,i}) present at the top of the label stack (LSi) encapsulated in a data packet is configured to extract said label from the label stack and to transmit the data packet to another node corresponding to the newly placed label at the top of the label stack, until the label stack is empty.

15. The communication network (10) according to claim 14, wherein the communication network (10) is a satellite communication network including a spatial domain whose nodes are formed by satellites (42) in non-geostationary orbit around the Earth, and a terrestrial domain at least part of the nodes of which are formed by gateway stations (45), routers (44), exchange points (43), and/or user terminals (41) for satellite communication.
